(19) Europäisches Patentamt
European Patent Office
Office européen des brevets

(11) **EP 4 679 725 A1**

(12) **EUROPEAN PATENT APPLICATION**
published in accordance with Art. 153(4) EPC

(43) Date of publication:
**14.01.2026 Bulletin 2026/03**

(21) Application number: 23925731.4

(22) Date of filing: **07.03.2023**

(51) International Patent Classification (IPC):
**H04B 7/0456** (2017.01)  **H04L 5/00** (2006.01)

(52) Cooperative Patent Classification (CPC):
**H04B 7/0456; H04L 5/00**

(86) International application number:
**PCT/CN2023/080159**

(87) International publication number:
**WO 2024/183008 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **LIU, Zhe**
**Dongguan, Guangdong 523860 (CN)**

(74) Representative: **Mewburn Ellis LLP**
**Aurora Building**
**Counterslip**
**Bristol BS1 6BX (GB)**

(54) **COMMUNICATION METHODS AND COMMUNICATION APPARATUSES**

(57)     A communication method and a communication apparatus are provided. The communication method includes the following. A terminal device sends a first physical uplink shared channel (PUSCH) and a second PUSCH. The terminal device corresponds to $N$ sounding reference signal (SRS) resource sets, the first PUSCH is associated with a first SRS resource set among the $N$ SRS resource sets, the second PUSCH is associated with a second SRS resource set among the $N$ SRS resource sets, and the first SRS resource set is different from the second SRS resource set. The terminal device includes $M$ antenna ports. A first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ are integers greater than or equal to 2. With the method in embodiments of the present disclosure, precoding matrices for multiple PUSCHs sent by the terminal device can meet the transmission requirements of the multi-transmission reception point (TRP)/panel transmission scheme.

FIG. 8

## Description

TECHNICAL FIELD

This disclosure relates to the field of communication technology, in particular to a communication method and a communication apparatus.

BACKGROUND

With the development of communication technology, a multi-transmission reception point (TRP)/panel transmission scheme is introduced in some communication systems. However, it is currently unclear how to determine an appropriate precoding matrix when the multi-TRP/panel transmission scheme is adopted.

SUMMARY

A communication method and a communication apparatus are provided in embodiments of the present disclosure. Various aspects involved in embodiments of the present disclosure will be introduced below.

In a first aspect, a communication method is provided. The communication method includes the following. A terminal device sends a first physical uplink shared channel (PUSCH) and a second PUSCH. The terminal device corresponds to $N$ sounding reference signal (SRS) resource sets, the first PUSCH is associated with a first SRS resource set among the $N$ SRS resource sets, the second PUSCH is associated with a second SRS resource set among the $N$ SRS resource sets, and the first SRS resource set is different from the second SRS resource set. The terminal device includes $M$ antenna ports. A first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ are integers greater than or equal to 2.

In a second aspect, a communication method is provided. The communication method includes the following. A network device receives a first PUSCH and a second PUSCH. A terminal device corresponds to N SRS resource sets, the first PUSCH is associated with a first SRS resource set among the $N$ SRS resource sets, the second PUSCH is associated with a second SRS resource set among the $N$ SRS resource sets, and the first SRS resource set is different from the second SRS resource set. The terminal device includes $M$ antenna ports. A first precoding matrix for the first PUSCH and a second precoding matrix for the second PUSCH belong to a first precoding matrix set, a non-zero element in a column vector of each precoding matrix in the first precoding matrix set is less than or equal to $M/N,$ and $M$ and $N$ are integers greater than or equal to 2.

In a third aspect, a communication apparatus is provided. The communication apparatus includes a sending unit. The sending unit is configured to send a first PUSCH and a second PUSCH. The terminal device corresponds to $N$ SRS resource sets, the first PUSCH is associated with a first SRS resource set among the N SRS resource sets, the second PUSCH is associated with a second SRS resource set among the N SRS resource sets, and the first SRS resource set is different from the second SRS resource set. The terminal device includes $M$ antenna ports. A first precoding matrix for the first PUSCH and a second precoding matrix for the second PUSCH belong to a first precoding matrix set, a non-zero element in a column vector of each precoding matrix in the first precoding matrix set is less than or equal to $M/N,$ and $M$ and N are integers greater than or equal to 2.

In a fourth aspect, a communication apparatus is provided. The communication apparatus includes a receiving unit. The receiving unit is configured to receive a first PUSCH and a second PUSCH. A terminal device corresponds to N SRS resource sets, the first PUSCH is associated with a first SRS resource set among the N SRS resource sets, the second PUSCH is associated with a second SRS resource set among the N SRS resource sets, and the first SRS resource set is different from the second SRS resource set. The terminal device includes $M$ antenna ports. A first precoding matrix for the first PUSCH and a second precoding matrix for the second PUSCH belong to a first precoding matrix set, a non-zero element in a column vector of each precoding matrix in the first precoding matrix set is less than or equal to $M/N,$ and $M$ and N are integers greater than or equal to 2.

In a fifth aspect, a communication apparatus is provided. The communication apparatus includes a memory, a transceiver, and a processor. The memory is configured to store a program. The processor is configured to perform data transmission and reception through the transceiver, and the processor is configured to invoke the program stored in the memory, to cause the communication apparatus to perform the method in the first aspect.

In a sixth aspect, a communication apparatus is provided. The communication apparatus includes a memory, a transceiver, and a processor. The memory is configured to store a program. The processor is configured to perform data transmission and reception through the transceiver, and the processor is configured to invoke the program stored in the memory, to cause the communication apparatus to perform the method in the second aspect.

In a seventh aspect, a communication apparatus is provided. The communication apparatus includes a processor. The processor is configured to invoke a program stored in a memory, to cause the communication apparatus to perform the method in the first aspect.

In an eighth aspect, a communication apparatus is provided. The communication apparatus includes a processor. The processor is configured to invoke a program stored in a memory, to cause the communication apparatus to perform the method in the second aspect.

In a ninth aspect, a chip is provided. The chip includes a processor. The processor is configured to invoke a program stored in a memory, to cause a device equipped with the chip to perform the method in the first aspect.

In a tenth aspect, a chip is provided. The chip includes a processor. The processor is configured to invoke a program stored in a memory, to cause a device equipped with the chip to perform the method in the second aspect.

In an eleventh aspect, a computer-readable storage medium is provided. The computer-readable storage medium is configured to store a program that causes a computer to perform the method in the first aspect.

In a twelfth aspect, a computer-readable storage medium is provided. The computer-readable storage medium is configured to store a program that causes a computer to perform the method in the second aspect.

In a thirteenth aspect, a computer program product is provided. The computer program product includes a program that causes a computer to perform the method in the first aspect.

In a fourteenth aspect, a computer program product is provided. The computer program product includes a program that causes a computer to perform the method in the second aspect.

In a fifteenth aspect, a computer program is provided. The computer program is operable with a computer to perform the method in the first aspect.

In a sixteenth aspect, a computer program is provided. The computer program is operable with a computer to perform the method in the second aspect.

In embodiments of the present disclosure, the non-zero element in the column vector of each precoding matrix in the first precoding matrix set is less than or equal to $M/N$, and the first precoding matrix for the first PUSCH and the second precoding matrix for the second PUSCH belong to the first precoding matrix set, such that precoding matrices for multiple PUSCHs sent by the terminal device can meet the transmission requirements of the multi-TRP/panel transmission scheme.

BRIEF DESCRIPTION OF THE DRAWINGS

FIG. 1 is an exemplary diagram of a wireless communication system to which embodiments of the present disclosure are applicable.

FIG. 2 is a schematic structural diagram of a terminal device when a single transmission reception point (sTRP) transmission scheme is adopted.

FIG. 3 is a schematic structural diagram of a terminal device when a spatial division multiplexing (SDM) transmission scheme is adopted.

FIG. 4 is a schematic structural diagram of another terminal device when an sTRP transmission scheme is adopted.

FIG. 5 is a schematic structural diagram of another terminal device when an SDM transmission scheme is adopted.

FIG. 6 is a schematic diagram illustrating an SDM transmission scheme.

FIG. 7 is a schematic diagram illustrating a single frequency network (SFN) transmission scheme.

FIG. 8 is a schematic flowchart illustrating a communication method provided in an embodiment of the present disclosure.

FIG. 9 is a schematic structural diagram of a communication apparatus provided in an embodiment of the present disclosure.

FIG. 10 is a schematic structural diagram of a communication apparatus provided in another embodiment of the present disclosure.

FIG. 11 is a schematic structural diagram of an apparatus provided in an embodiment of the present disclosure.

DETAILED DESCRIPTION

The following will describe technical solutions of the present disclosure with reference to accompanying drawings.

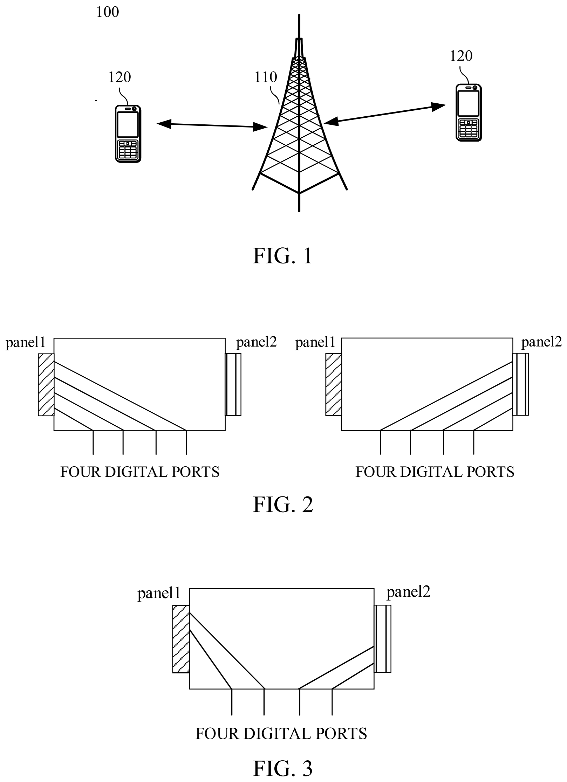

FIG. 1 illustrates a wireless communication system 100 to which embodiments of the present disclosure are applicable. The wireless communication system 100 may include a network device 110 and a user equipment (UE) 120. The network device 110 can communicate with the UE 120. The network device 110 can provide communication coverage for a specific geographical area and communicate with UEs 120 in the coverage area. The UE 120 can access a network (e.g., a wireless network) through the network device 110.

FIG. 1 exemplarily illustrates one network device and two UEs. Optionally, the wireless communication system 100 may also include multiple network devices, and there may be other quantities of UEs in a coverage area of each of the multiple network devices, which is not limited in embodiments of the present disclosure. Optionally, the wireless communication system 100 may further include other network entities such as a network controller, a mobility management entity (MME), etc., which is not limited in embodiments of the present embodiment.

It may be understood that, the technical solutions of embodiments of the present disclosure may be applicable to various communication systems, such as: a 5th generation (5G) system or a new radio (NR) system, a long-term evolution (LTE) system, an LTE frequency division duplex (FDD) system, an LTE time division duplex (TDD) system, etc. The technical solutions provided in the present disclosure may also be applicable to future communication systems, such as a sixth generation (6G) mobile communication system, a satellite communication system, etc.

The UE in embodiments of the present disclosure may also be referred to as a terminal device, an access terminal, a subscriber unit, a subscriber station, a mobile station (MS), a mobile terminal (MT), a remote station, a remote terminal, a mobile device, a user terminal, a terminal, a wireless CN network element, a user agent, a user device, etc. The UE in embodiments of the present disclosure may be a device that provides voice and/or data connectivity to a user and is capable of connecting people, objects, and machines, such as a handheld device with a wireless connection function, a vehicle-in device, etc. The UE in embodiments of the present disclosure may be a mobile phone, a pad, a laptop computer, a tablet computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the UE may be used to act as a base station. For example, the UE may act as a scheduling entity that provides a sidelink signal between UEs in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

The network device in embodiments of the present disclosure may be a device for communicating with the UE, and the network device may also be referred to as an access network (AN) device or a radio access network (RAN) device, for example, the network device may be a base station. The network device in embodiments of the present disclosure may refer to an RAN node (or device) that connects the UE to a wireless network. The base station may broadly cover various names in the following, or may be interchangeable with one of the following names, for example, an NodeB, an evolved NodeB (eNB), a next generation NodeB (gNB), a relay station, an access point, a transmission reception point (TRP), a transmitting point (TP), a master MeNB, a secondary SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, etc., or a combination thereof.

In some embodiments, the network device may be fixed or mobile. For example, a helicopter or an unmanned aerial vehicle may be configured to act as a mobile base station, and one or more cells may move depending on a position of the mobile base station. In other examples, a helicopter or an unmanned aerial vehicle may be configured to serve as a device in communication with another network device. In some embodiments, the network device may be a CU or a DU, the network device may include a CU and a DU, or the network device may also include an AAU.

It may be understood that, the network device may be deployed on land, which includes indoor or outdoor, handheld, wearable, or in-vehicle, may be deployed on water, or may be deployed in the air (such as airplanes, balloons, satellites, etc.). The scenarios in which the network device is located are not limited in embodiments of the present disclosure.

It may be understood that, all or some of functions of the network device and the UE in the present disclosure may also be implemented by software functions running on hardware, or by virtualization functions implemented on a platform (e.g., a cloud platform).

A physical uplink shared channel (PUSCH) transmission scheme will be introduced below.

In release 15 (Rel-15) and release 16 (Rel-16) of the NR system, a codebook-based transmission scheme and a non-codebook-based transmission scheme can be used for PUSCH transmission.

A process of the codebook-based transmission scheme may include the following steps:

(1) a terminal device (UE) sends a sounding reference signal (SRS) for codebook to a network device;
(2) the network device performs uplink channel detection according to the SRS sent by the UE, performs resource scheduling for the UE, and determines an SRS resource, the number of layers of uplink transmission, and a precoding matrix that correspond to PUSCH transmission; and the network device indicates the above information to the UE through downlink control information (DCI); and
(3) the UE receives the DCI, and sends a PUSCH according to the indication of the DCI.

In the codebook-based PUSCH transmission scheme, the network device indicates to the UE the SRS resource corresponding to the PUSCH, the number of transmission layers of the PUSCH, and the precoding matrix for the PUSCH through the DCI. Fields in the DCI include a precoding information and number of layers (TPMI) field and an SRS resource indicator (SRI) field. In Rel-15 and Rel-16 of the NR system, the number of transmission layers of the PUSCH and the precoding matrix for the PUSCH are indicated through joint coding.

For the codebook-based transmission scheme, the UE can determine the number of bits in the TPMI field according to a configured maximum number of transmission layers (also referred to as "maximum number of layers" or "maximum rank"), that is, a value of a configured higher-layer parameter *maxRank.*

A process of the non-codebook-based transmission scheme may include the following steps:

(1) a UE measures a downlink reference signal, obtains a candidate precoding matrix, precodes an SRS by using the candidate precoding matrix, and then sends an SRS for non-codebook to a network device;
(2) the network device performs uplink channel detection according to the SRS sent by the UE, performs resource scheduling for the UE, and determines an SRS resource corresponding to a beam for PUSCH transmission; and the network device indicates the above information to the UE through DCI; and
(3) the UE receives the DCI, and sends a PUSCH according to the indication of the DCI.

In the non-codebook-based PUSCH transmission scheme, the network device indicates to the UE the number of transmission layers of the PUSCH and an SRS resource in an SRS resource set through an SRI field in the DCI. For the non-codebook-based transmission, the UE determines the number of bits in the SRI field according to a configured maximum number of transmission layers, that is, a configured higher-layer parameter *maxMIMO-Layers.*

In release 17 (Rel-17) of the NR system, multi-TRP PUSCH transmission (i.e., multi-TRP/panel transmission scheme) is supported. The multi-TRP/panel transmission scheme in Rel-17 will be introduced below.

Multi-TRP-based downlink and uplink non-coherent transmission is introduced in the NR system. An inter-TRP backhaul connection may be ideal or non-ideal. Fast dynamic inter-TRP information exchange may be performed in ideal backhaul. In non-ideal backhaul, only quasi-static inter-TRP information exchange may be performed due to a great delay. In downlink non-coherent transmission, transmission of multiple PDSCHs for one UE may be scheduled through multiple TRPs separately using different control channels, and the transmission from different TRPs may also be scheduled using the same control channel, where data from different TRPs are transmitted using different transmission layers. The scheduling using the same control channel is only applicable to ideal backhaul.

In Rel-17 of the NR system, the UE can send PUSCHs to two TRPs in a time division multiplexing (TDM) manner. The network device can schedule, through single DCI, the UE to transmit PUSCHs to two (or more than two) TRPs. The PUSCHs transmitted to the two TRPs may be configured with independent transmission parameters, e.g., beams and precoding matrices, and the number of transmission layers of the PUSCHs transmitted to the two TRPs is constrained to be the same. In Rel-17 of the NR system, the PUSCHs transmitted to the two TRPs are transmitted in the TDM manner. The PUSCHs transmitted by the UE to different TRPs are aligned with corresponding TRPs for analog beamforming, thereby distinguishing different PUSCHs according to the spatial domain and improving uplink spectrum efficiency.

For the codebook-based PUSCH transmission, the single DCI needs to contain two SRI fields. The first TPMI field indicates precoding information of a PUSCH transmitted to TRP1 and the number of transmission layers of the PUSCH transmitted to TRP 1, and the number of transmission layers of a PUSCH transmitted to TRP2 is the same as the number of transmission layers indicated by the first TPMI field. The network device configures two SRS resource sets, the two SRS resource sets correspond to the first SRI field and the second SRI field, respectively, and the first SRI field and the second SRI field each indicate a beam direction of one of the PUSCHs transmitted to the two TRPs. The second TPMI field only needs to indicate precoding information, and the number of transmission layers is the same as the number of transmission layers indicated by the first TPMI field by default. For the non-codebook-based PUSCH transmission, the single DCI needs to contain two SRI fields. The first SRI field indicates a beam direction of the PUSCH transmitted to TRP1 and the number of transmission layers of the PUSCH transmitted to TRP1, the second SRI field indicates a beam direction of the PUSCH transmitted to TRP2, and the number of transmission layers of the PUSCH transmitted to TRP2 is the same as the number of transmission layers indicated by the first SRI field.

Currently, multiple panels may be deployed on a UE side. There are two modes for deploying the multiple panels on the UE side.

Mode 1: digital ports are shared across multiple panels. Four digital ports are shared across two panels, and each panel is associated with one SRS resource set. For example, as illustrated in FIG. 2, for a single TRP (sTRP) transmission scheme, the four digital ports are connected to one of the two panels, i.e., either panel1 or panel2, and the maximum number of transmission layers is four. For the multi-panel/TRP transmission scheme, taking a spatial division multiplexing (SDM) scheme as an example, four digital ports are connected to two panels. For example, as illustrated in FIG. 3, each panel corresponds to two digital ports, which means that each panel is supported for the transmission of two layers.

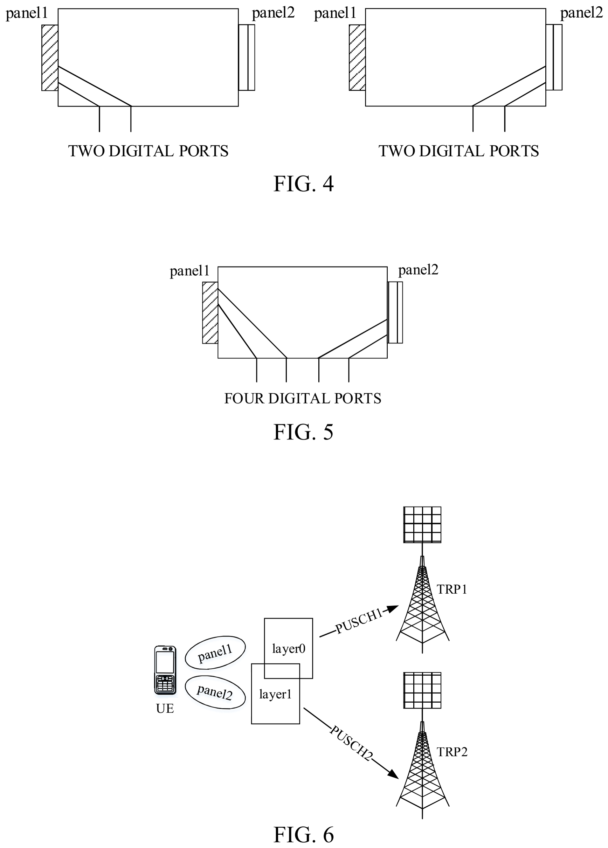

Mode 2: digital ports are not shared across multiple panels, and each panel corresponds to independent digital ports. Each of two panels corresponds to two digital ports, and each panel is associated with one SRS resource set. For example, as illustrated in FIG. 4, for the sTRP transmission scheme, two ports connected to panel1 or panel2 are used for transmission, and the maximum number of transmission layers is two. For the multi-panel/TRP transmission scheme, taking an SDM scheme as an example, for example, as illustrated in FIG. 5, two digital ports corresponding to each panel can support each panel to transmit two layers at the same time, and thus a total of four layers can be transmitted for the SDM scheme.

It may be noted that, in the present disclosure, the digital port may be replaced by "radio frequency (RF) link" or "antenna port". In the following embodiments, the digital port is referred to as "antenna port".

A mode adopted by different terminal manufacturers may be Mode 1 or Mode 2. For Mode 1, since antenna ports are shared across multiple panels, when PUSCHs are transmitted from multiple panels simultaneously, four antenna ports need to be mapped to two panels. However, it is still unclear how to select an appropriate precoding matrix and how to map a PUSCH port to an SRS port. For example, when the antenna ports are shared across two panels, the UE only supports up to 2 antenna ports, but in the existing method, the network device may configure the UE with a precoding matrix corresponding to four antenna ports. In this case, the UE does not support the precoding matrix, and thus cannot transmit the PUSCH based on the precoding matrix.

In order to address one or more of the technical problems, the present disclosure provides a communication method and a communication apparatus, which can make precoding matrices for multiple PUSCHs sent by the UE meet the transmission requirements of the multi-TRP/panel transmission scheme. In the present disclosure, the UE can be configured with two or more panels. For ease of description, the following embodiments are illustrated with an example that the UE is configured with two panels (panel1 and panel2).

In the present disclosure, a scheme of scheduling multiple panels for simultaneous transmission through the single DCI can support the SDM scheme and a single frequency network (SFN) scheme. The SDM scheme and the SFN scheme will be introduced below.

For the SDM scheme, different transmission layer sets of one PUSCH are sent to TRP(s) through different panels of the UE. Optionally, uplink resources for different transmission layer sets of the PUSCH may be the same. In the present disclosure, one part of transmission layers (layer0 as illustrated in FIG. 6) of the PUSCH sent through panel1 may be associated with a first SRS resource set and may be denoted as a first PUSCH (PUSCH1 as illustrated in FIG. 6), and the other part of the transmission layers (layer1 as illustrated in FIG. 6) of the PUSCH sent through panel2 may be associated with a second SRS resource set and may be denoted as a second PUSCH (PUSCH2 as illustrated in FIG. 6).

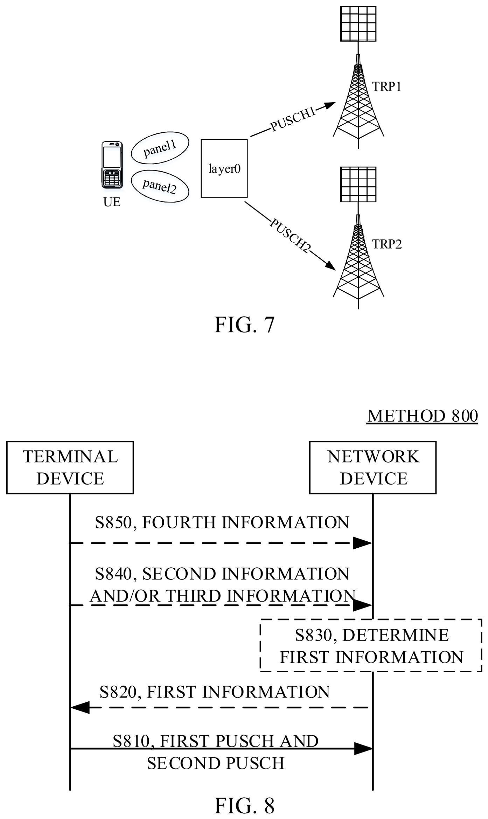

For the SFN scheme: as illustrated in FIG. 7, the SFN scheme can have the following characteristics: repeated transmissions of one PUSCH can be sent to TRP(s) through different panels, and can be denoted as a first PUSCH (PUSCH1 as illustrated in FIG. 7) and a second PUSCH (PUSCH2 as illustrated in FIG. 7) in the present disclosure. Optionally, the first PUSCH and the second PUSCH may have the same frequency domain resource, the same time domain resource, the same dedicated demodulation reference signals (DMRS) port, and the same used transmission layer (layer0 as illustrated in FIG. 7).

Embodiments of the present disclosure will be exemplified in detail below with reference to FIG. 8.

FIG. 8 is a schematic flowchart illustrating a communication method provided in embodiments of the present disclosure. The method 800 illustrated in FIG. 8 can include operations at S810 as follows.

At S810, a terminal device sends a first PUSCH and a second PUSCH to a network device.

The terminal device may correspond to N SRS resource sets, which can mean that the terminal device is configured with $N$ SRS resource sets, and $N$ is an integer greater than or equal to 2.

Optionally, the first PUSCH may be associated with a first SRS resource set among the N SRS resource sets, and the second PUSCH may be associated with a second SRS resource set among the N SRS resource sets. Optionally, the first SRS resource set may be different from the second SRS resource set.

The terminal device may include $M$ antenna ports, where $M$ is an integer greater than or equal to 2. Optionally, a first precoding matrix for the first PUSCH and a second precoding matrix for the second PUSCH may belong to a first precoding matrix set, and a non-zero element in a column vector of each precoding matrix in the first precoding matrix set may be less than or equal to $M/N$.

In embodiments of the present disclosure, the non-zero element in the column vector of each precoding matrix in the first precoding matrix set is less than or equal to $M/N$, and the first precoding matrix for the first PUSCH and the second precoding matrix for the second PUSCH belong to the first precoding matrix set, such that the precoding matrices for the multiple PUSCHs sent by the terminal device can meet the transmission requirements of the multi-TRP/panel transmission scheme.

The network device may be an AN device, and two or more TRPs may be deployed in the network device. The first PUSCH may be sent by the terminal device to a first TRP in the network device, and the second PUSCH may be sent by the terminal device to a second TRP in the network device. Optionally, the first PUSCH and the second PUSCH may be codebook-based PUSCH transmissions. Alternatively, the network device may include a separately deployed TRP. Optionally, the network device may include two or more separately deployed TRPs.

The number of antenna ports corresponding to a precoding matrix in the first precoding matrix set may be $M$ or $M/N$.

In some embodiments, the precoding matrix in the first precoding matrix set may be used for single-layer PUSCH transmission using two antenna ports. Optionally, the first precoding matrix set may contain:

$$\left\{ \frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix} \right\}.$$

Precoding matrices in the first precoding matrix set and the respective index values may be as illustrated in Table 1 below.

Table 1: an example of precoding matrices and respective index values

| Index | 0 | 1 | 2 | 3 | 4 | 5 |
|---|---|---|---|---|---|---|
| Precoding matrix | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ |

In some embodiments, the precoding matrix in the first precoding matrix set may be used for two-layer PUSCH transmission using two antenna ports. Optionally, the first precoding matrix set may contain:

$$\left\{ \frac{1}{\sqrt{2}}\begin{bmatrix}1&0\\0&1\end{bmatrix}, \frac{1}{\sqrt{2}}\begin{bmatrix}1&1\\1&-1\end{bmatrix}, \frac{1}{\sqrt{2}}\begin{bmatrix}1&1\\j&-j\end{bmatrix} \right\}.$$

The precoding matrices in the first precoding matrix set and the respective index values may be as illustrated in Table 2 below.

Table 2: an example of precoding matrices and respective index values

| Index | 0 | 1 | 2 |
|---|---|---|---|
| Precoding matrix | $\frac{1}{\sqrt{2}}\begin{bmatrix}1&0\\0&1\end{bmatrix}$ | $\frac{1}{\sqrt{2}}\begin{bmatrix}1&1\\1&-1\end{bmatrix}$ | $\frac{1}{\sqrt{2}}\begin{bmatrix}1&1\\j&-j\end{bmatrix}$ |

In some embodiments, the precoding matrix in the first precoding matrix set may be used for single-layer PUSCH transmission using four antenna ports. Optionally, the first precoding matrix set may contain:

$$\left\{ \frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix} \right\}.$$

The precoding matrices in the first precoding matrix set and the respective index values may be as illustrated in Table 3 below.

Table 3: an example of precoding matrices and respective index values

| Index | 0 | 1 | 2 | 3 | 4 | 5 |
|---|---|---|---|---|---|---|
| Precoding matrix | $\frac{1}{\sqrt{2}}\begin{bmatrix}1\\0\\0\\0\end{bmatrix}$ | $\frac{1}{\sqrt{2}}\begin{bmatrix}0\\1\\0\\0\end{bmatrix}$ | $\frac{1}{\sqrt{2}}\begin{bmatrix}0\\0\\1\\0\end{bmatrix}$ | $\frac{1}{\sqrt{2}}\begin{bmatrix}0\\0\\0\\1\end{bmatrix}$ | $\frac{1}{\sqrt{2}}\begin{bmatrix}1\\0\\1\\0\end{bmatrix}$ | $\frac{1}{\sqrt{2}}\begin{bmatrix}1\\0\\-1\\0\end{bmatrix}$ |

(continued)

| Index | 6 | 7 | 8 | 9 | 10 | 11 |
|---|---|---|---|---|---|---|
| Precoding matrix | $\frac{1}{\sqrt{2}}\begin{bmatrix}1\\0\\j\\0\end{bmatrix}$ | $\frac{1}{\sqrt{2}}\begin{bmatrix}1\\0\\-j\\0\end{bmatrix}$ | $\frac{1}{\sqrt{2}}\begin{bmatrix}0\\1\\0\\1\end{bmatrix}$ | $\frac{1}{\sqrt{2}}\begin{bmatrix}0\\1\\0\\-1\end{bmatrix}$ | $\frac{1}{\sqrt{2}}\begin{bmatrix}0\\1\\0\\j\end{bmatrix}$ | $\frac{1}{\sqrt{2}}\begin{bmatrix}0\\1\\0\\-j\end{bmatrix}$ |

In some embodiments, the precoding matrix in the first precoding matrix set may be used for two-layer PUSCH transmission using four antenna ports. Optionally, the first precoding matrix set may contain:

$$\left\{\frac{1}{\sqrt{2}}\begin{bmatrix}1&0\\0&1\\0&0\\0&0\end{bmatrix}, \frac{1}{\sqrt{2}}\begin{bmatrix}1&0\\0&0\\0&1\\0&0\end{bmatrix}, \frac{1}{\sqrt{2}}\begin{bmatrix}1&0\\0&0\\0&0\\0&1\end{bmatrix}, \frac{1}{\sqrt{2}}\begin{bmatrix}0&0\\1&0\\0&1\\0&0\end{bmatrix}, \frac{1}{\sqrt{2}}\begin{bmatrix}0&0\\1&0\\0&0\\0&1\end{bmatrix}, \frac{1}{\sqrt{2}}\begin{bmatrix}0&0\\0&0\\1&0\\0&1\end{bmatrix}\right\}.$$

The precoding matrices in the first precoding matrix set and the respective index values may be as illustrated in Table 4 below.

Table 4: an example of precoding matrices and respective index values

| Index | 0 | 1 | 2 | 3 | 4 | 5 |
|---|---|---|---|---|---|---|
| Precoding matrix | $\frac{1}{\sqrt{2}}\begin{bmatrix}1&0\\0&1\\0&0\\0&0\end{bmatrix}$ | $\frac{1}{\sqrt{2}}\begin{bmatrix}1&0\\0&0\\0&1\\0&0\end{bmatrix}$ | $\frac{1}{\sqrt{2}}\begin{bmatrix}1&0\\0&0\\0&0\\0&1\end{bmatrix}$ | $\frac{1}{\sqrt{2}}\begin{bmatrix}0&0\\1&0\\0&1\\0&0\end{bmatrix}$ | $\frac{1}{\sqrt{2}}\begin{bmatrix}0&0\\1&0\\0&0\\0&1\end{bmatrix}$ | $\frac{1}{\sqrt{2}}\begin{bmatrix}0&0\\0&0\\1&0\\0&1\end{bmatrix}$ |

The precoding matrix in the first precoding matrix set in Table 3 and Table 4 may support transmission with a codebook subset type of partial and non-coherent.

It may be noted that, the first precoding matrix set may be used for single-layer PUSCH transmission using two antenna ports, may be used for two-layer PUSCH transmission using two antenna ports, may be used for single-layer PUSCH transmission using four antenna ports, or may be used for two-layer PUSCH transmission using four antenna ports. For example, the first precoding matrix set may include the precoding matrices in one or more of Table 1 to Table 4.

Generally, a non-zero element in a column vector of a precoding matrix may represent the number of antenna ports corresponding to a panel (or an SRS resource). For a terminal device with Mode 1, when antenna ports are shared across multiple panels, the number of antenna ports corresponding to each panel may be $M/N$. In this case, the non-zero element in the column vector of each precoding matrix in the first precoding matrix set is less than or equal to $M/N$, which can ensure that the precoding matrix configured by the network device is suitable for the terminal device, and avoid the case that the terminal device cannot support the precoding matrix configured by the network device.

Before the operations at S810, the method 800 can further include operations at S820 as follows.

At S820, the network device sends first information to the terminal device.

The first information may be DCI. Optionally, a format of the first information may be DCI format 0-1 or DCI format 0-2.

Optionally, the first information may contain a first TPMI field and a second TPMI field. The first TPMI field indicates the first precoding matrix, and the second TPMI field indicates the second precoding matrix.

Correspondingly, at S810, the terminal device can send the first PUSCH and the second PUSCH according to the first information.

Optionally, the first TPMI field may indicate an index of the first precoding matrix in the first precoding matrix set and the number of transmission layers corresponding to the first precoding matrix, and the second TPMI field may indicate an index of the second precoding matrix in the first precoding matrix set and the number of transmission layers corresponding to the second precoding matrix.

Optionally, the index and the number of transmission layers corresponding to each precoding matrix may correspond to one index value, and the index value may be indicated by the first TPMI field and/or the second TPMI field. Detailed illustrations are given below with reference to Table 5 to Table 8 as examples.

For example, when the number of antenna ports is four, a transform precoder is disabled, the maximum number of transmission layers is two, and an uplink fullpower transmission higher-layer parameter is not configured or is configured to fullpower Mode2 or is configured to fullpower, then the first TPMI field and/or the second TPMI field may indicate any index value in Table 5 below.

Table 5: indexes of precoding matrices and the numbers of transmission layers corresponding to the precoding matrices

| Index value | codebookSubset = partialAndNonCoherent | Index value | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 2 layers: TPMI=0 | 4 | 2 layers: TPMI=0 |
| 5 | 2 layers: TPMI=1 | 5 | 2 layers: TPMI=1 |
| 6 | 2 layers: TPMI=2 | 6 | 2 layers: TPMI=2 |
| 7 | 2 layers: TPMI=3 | 7 | 2 layers: TPMI=3 |
| 8 | 2 layers: TPMI=4 | 8 | 2 layers: TPMI=4 |
| 9 | 2 layers: TPMI=5 | 9 | 2 layers: TPMI=5 |
| 10 | 1 layer: TPMI=4 | 10-15 | reserved |
| 11 | 1 layer: TPMI=5 | | |
| 12 | 1 layer: TPMI=6 | | |
| 13 | 1 layer: TPMI=7 | | |
| 14 | 1 layer: TPMI=8 | | |
| 15 | 1 layer: TPMI=9 | | |
| 16 | 1 layer: TPMI=10 | | |
| 17 | 1 layer: TPMI=11 | | |
| 18-31 | reserved | | |

As can be seen from Table 5, when a codebook subset (*codebookSubset*) is configured to non-coherent (*nonCoherent*), a valid index of TPMI has an index value ranging from 0 to 9, and an index value ranging from 10 to 15 indicates a reserved state, with a total of 4 bits; and when the codebook subset is configured to partial and non-coherent (*partialAndNonCoherent*), the valid index of TPMI has an index value ranging from 0 to 17, and an index value ranging from 18 to 31 indicates the reserved state, with a total of 5 bits. For example, if *codebookSubset* is configured to *nonCoherent,* when the first TPMI field indicates an index value of 4, it can indicate that the index of the first precoding matrix in the first precoding matrix set is 0, and the number of transmission layers corresponding to the first precoding matrix is two layers. As can be seen from Table 5, in this case, the first precoding matrix may at least include the precoding matrices in Table 3 and Table 4.

For example, when the number of antenna ports is four, the transform precoder is disabled, the maximum number of transmission layers is two, and the uplink fullpower transmission higher-layer parameter is configured to fullpower Mode1, then the first TPMI field and/or the second TPMI field may indicate any index value in Table 6 below.

Table 6: indexes of precoding matrices and the numbers of transmission layers corresponding to the precoding matrices

| Index value | codebookSubset = partialAndNonCoherent | Index value | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 2 layers: TPMI=0 | 4 | 2 layers: TPMI=0 |

(continued)

| Index value | codebookSubset = partialAndNonCoherent | Index value | codebookSubset= nonCoherent |
|---|---|---|---|
| 5 | 2 layers: TPMI=1 | 5 | 2 layers: TPMI=1 |
| 6 | 2 layers: TPMI=2 | 6 | 2 layers: TPMI=2 |
| 7 | 2 layers: TPMI=3 | 7 | 2 layers: TPMI=3 |
| 8 | 2 layers: TPMI=4 | 8 | 2 layers: TPMI=4 |
| 9 | 2 layers: TPMI=5 | 9 | 2 layers: TPMI=5 |
| 10 | 1 layer: TPMI=4 | 10-15 | reserved |
| 11 | 1 layer: TPMI=5 | | |
| 12 | 1 layer: TPMI=6 | | |
| 13 | 1 layer: TPMI=7 | | |
| 14 | 1 layer: TPMI=8 | | |
| 15 | 1 layer: TPMI=9 | | |
| 16 | 1 layer: TPMI=10 | | |
| 17 | 1 layer: TPMI=11 | | |
| 18-31 | reserved | | |

As can be seen from Table 6, when *codebookSubset* is configured to *nonCoherent,* the valid index of TPMI has an index value ranging from 0 to 9, and an index value ranging from 10 to 15 indicates the reserved state, with a total of 4 bits; and when *codebookSubset* is configured to *partialAndNonCoherent,* the valid index of TPMI has an index value ranging from 0 to 17, and an index value ranging from 18 to 31 indicates the reserved state, with a total of 5 bits.

For example, when the number of antenna ports is four, the transform precoder is disabled, the maximum number of transmission layers is one, and the uplink fullpower transmission higher-layer parameter is not configured or is configured to fullpower Mode2 or is configured to fullpower, then the first TPMI field and/or the second TPMI field may indicate any index value in Table 7 below. Alternatively, when the number of antenna ports is four, the transform precoder is enabled, the maximum number of transmission layers is one, and the uplink fullpower transmission higher-layer parameter is not configured or is configured to fullpower Mode2, then the first TPMI field and/or the second TPMI field may indicate any index value in Table 7 below.

Table 7: indexes of precoding matrices and the numbers of transmission layers corresponding to the precoding matrices

| Index value | codebookSubset = partialAndNonCoherent | Index value | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=4 | | |
| 5 | 1 layer: TPMI=5 | | |
| 6 | 1 layer: TPMI=6 | | |
| 7 | 1 layer: TPMI=7 | | |
| 8 | 1 layer: TPMI=8 | | |
| 9 | 1 layer: TPMI=9 | | |
| 10 | 1 layer: TPMI=10 | | |
| 11 | 1 layer: TPMI=11 | | |
| 12-15 | reserved | | |

As can be seen from Table 7, when *codebookSubset* is configured to *nonCoherent,* the valid index of TPMI has an index value ranging from 0 to 3, with a total of 2 bits; and when *codebookSubset* is configured to *partialAndNonCoherent,* the valid index of TPMI has an index value ranging from 0 to 11, and an index value ranging from 12 to 15 indicates the reserved state, with a total of 4 bits. As can be seen from Table 7, in this case, the first precoding matrix may at least include the precoding matrices in Table 3.

For example, when the number of antenna ports is four, the transform precoder is enabled or disabled, the maximum number of transmission layers is one, and the uplink fullpower transmission higher-layer parameter is configured to fullpower Mode1, then the first TPMI field and/or the second TPMI field may indicate any index value in Table 8 below.

Table 8: indexes of precoding matrices and the numbers of transmission layers corresponding to the precoding matrices

| Index value | *codebookSubset = partialAndNonCoherent* | Index value | *codebookSubset= nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=4 | | |
| 5 | 1 layer: TPMI=5 | | |
| 6 | 1 layer: TPMI=6 | | |
| 7 | 1 layer: TPMI=7 | | |
| 8 | 1 layer: TPMI=8 | | |
| 9 | 1 layer: TPMI=9 | | |
| 10 | 1 layer: TPMI=10 | | |
| 11 | 1 layer: TPMI=11 | | |
| 12-15 | reserved | | |

As can be seen from Table 8, when *codebookSubset* is configured to *nonCoherent,* the valid index of TPMI has an index value ranging from 0 to 3, with a total of 2 bits; and when *codebookSubset* is configured to *partialAndNonCoherent,* the valid index of TPMI has an index value ranging from 0 to 11, and an index value ranging from 12 to 15 indicates the reserved state, with a total of 4 bits.

In embodiments of the present disclosure, a precoding matrix(s) that is not supported by the terminal device is removed from the first precoding matrix set, which is equivalent to reducing the number of candidate values indicated by the first TPMI field (or the second TPMI field). As such, the number of bits in the first TPMI field (or the second TPMI field) can be reduced, thereby saving transmission resources.

For example, for Table 7 and Table 8, only 4 bits are needed for the first TPMI field and the second TPMI field, with 1 bit less than that in the related art.

For example, when the number of antenna ports is two, the transform precoder is disabled, the maximum number of transmission layers is two, and the uplink fullpower transmission higher-layer parameter is not configured or is configured to fullpower Mode2 or is configured to fullpower, then the first TPMI field and/or the second TPMI field may indicate any index value in Table 9 below.

Table 9: indexes of precoding matrices and the numbers of transmission layers corresponding to the precoding matrices

| Index value | *codebookSubset = partialAndNonCoherent* | Index value | *codebookSubset= nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 2 layers: TPMI=0 | 2 | 2 layers: TPMI=0 |
| 3 | 1 layer: TPMI=2 | 3 | reserved |

(continued)

| Index value | codebookSubset = partialAndNonCoherent | Index value | codebookSubset= nonCoherent |
|---|---|---|---|
| 4 | 1 layer: TPMI=3 | | |
| 5 | 1 layer: TPMI=4 | | |
| 6 | 1 layer: TPMI=5 | | |
| 7 | 2 layers: TPMI=1 | | |
| 8 | 2 layers: TPMI=2 | | |
| 9-15 | reserved | | |

As can be seen from Table 9, when *codebookSubset* is configured to *nonCoherent,* the valid index of TPMI has an index value ranging from 0 to 2, and an index value of 3 indicates the reserved state, with a total of 2 bits; and when *codebookSubset* is configured to *partialAndNonCoherent,* the valid index of TPMI has an index value ranging from 0 to 8, and an index value ranging from 9 to 15 indicates the reserved state, with a total of 4 bits. As can be seen from Table 9, in this case, the first precoding matrix may at least include the precoding matrices in Table 1 and Table 2.

For example, when the number of antenna ports is two, the transform precoder is disabled, the maximum number of transmission layers is two, and the uplink fullpower transmission higher-layer parameter is configured to fullpower Mode1, then the first TPMI field and/or the second TPMI field may indicate any index value in Table 10 below.

Table 10: indexes of precoding matrices and the numbers of transmission layers corresponding to the precoding matrices

| Index value | codebookSubset= nonCoherent |
|---|---|
| 0 | 1 layer: TPMI=0 |
| 1 | 1 layer: TPMI=1 |
| 2 | 2 layers: TPMI=0 |
| 3 | 1 layer: TPMI=2 |

As can be seen from Table 10, when *codebookSubset* is configured to *nonCoherent,* the valid index of TPMI has an index value ranging from 0 to 3, with a total of 2 bits. As can be seen from Table 12, in this case, the first precoding matrix may at least include the precoding matrices in Table 1 and Table 2.

For example, when the number of antenna ports is two, the transform precoder is enabled or disabled, the maximum number of transmission layers is one, and the uplink fullpower transmission higher-layer parameter is not configured or is configured to fullpower Mode2 or is configured to fullpower, then the first TPMI field and/or the second TPMI field may indicate any index value in Table 11 below.

Table 11: indexes of precoding matrices and the numbers of transmission layers corresponding to the precoding matrices

| Index value | codebookSubset = partialAndNonCoherent | Index value | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | | |
| 3 | 1 layer: TPMI=3 | | |
| 4 | 1 layer: TPMI=4 | | |
| 5 | 1 layer: TPMI=5 | | |
| 6-7 | reserved | | |

As can be seen from Table 11, when *codebookSubset* is configured to *nonCoherent,* the valid index of TPMI has an index value ranging from 0 to 1, with a total of 1 bit; and when *codebookSubset* is configured to *partialAndNonCoherent,* the valid index of TPMI has an index value ranging from 0 to 5, and an index value ranging from 6 to 7 indicates the reserved state, with a total of 3 bits. As can be seen from Table 11, in this case, the first precoding matrix may at least include the precoding matrices in Table 1.

For example, when the number of antenna ports is two, the transform precoder is enabled or disabled, the maximum number of transmission layers is one, and the uplink fullpower transmission higher-layer parameter is configured to fullpower Mode1, then the first TPMI field and/or the second TPMI field may indicate any index value in Table 12 below.

Table 12: indexes of precoding matrices and the numbers of transmission layers corresponding to the precoding matrices

| Index value | codebookSubset= nonCoherent |
|---|---|
| 0 | 1 layer: TPMI=0 |
| 1 | 1 layer: TPMI=1 |
| 2 | 1 layer: TPMI=2 |
| 3 | reserved |

As can be seen from Table 12, when *codebookSubset* is configured to *nonCoherent,* the valid index of TPMI has an index value ranging from 0 to 2, and an index value of 3 indicates the reserved state, with a total of 2 bits. As can be seen from Table 12, in this case, the first precoding matrix may at least include the precoding matrices in Table 1.

Optionally, the first information may further contain a first SRI field and a second SRI field. The first SRI field may indicate information related to the first SRS resource set, and the second SRI field may indicate information related to the second SRS resource set. Alternatively, the first SRI field may indicate the information related to the second SRS resource set, and the second SRI field may indicate the information related to the first SRS resource set.

For example, the first SRI field may indicate a first SRS resource (e.g., in the first SRS resource set), and the second SRI field may indicate a second SRS resource (e.g., in the second SRS resource set). The number of SRS ports of the first SRS resource may be greater than or equal to $P$, and the number of SRS ports of the second SRS resource may be greater than or equal to $Q$.

Optionally, the number of antenna ports corresponding to a precoding matrix indicated by the first TPMI field may be the same as the number of $P$ ports among SRS ports of an SRS resource indicated by the first SRI field, and the number of antenna ports corresponding to a precoding matrix indicated by the second TPMI field may be the same as the number of $Q$ ports among SRS ports of an SRS resource indicated by the second SRI field. The number of antenna ports corresponding to the precoding matrix indicated by the first TPMI field may be replaced by the number of antenna ports corresponding to a precoder indicated by the first TPMI field, and the number of antenna ports corresponding to the precoding matrix indicated by the second TPMI field may be replaced by the number of antenna ports corresponding to a precoder indicated by the second TPMI field.

Optionally, $P$ and $Q$ each may be less than or equal to $1/N$ of the maximum number of transmission layers (e.g., a first maximum number of transmission layers in the following), or $P$ and $Q$ each may be less than or equal to the maximum number of transmission layers (e.g., a second maximum number of transmission layers in the following).

Optionally, a sum of $P$ and $Q$ may be equal to the maximum number of transmission layers (e.g., the first maximum number of transmission layers), or the sum of $P$ and $Q$ may be equal to twice the maximum number of transmission layers (e.g., the second maximum number of transmission layers).

Optionally, the $P$ ports may be the first $P$ ports or any $P$ ports among the SRS ports of the SRS resource indicated by the first SRI field. The $Q$ ports may be the first $Q$ ports or any $Q$ ports among the SRS ports of the SRS resource indicated by the first SRI field.

Optionally, $P$ and $Q$ may have the same value, for example, both are 2.

Optionally, the first information may further contain a first indication information field. The first indication information field may indicate whether Type 1 transmission scheme or Type 2 transmission scheme is adopted by the terminal device. Type 1 transmission scheme may refer to the multi-panel/TRP transmission scheme, and Type 2 transmission scheme may refer to the sTRP transmission scheme. For example, the first indication information field may indicate that a transmission scheme for the terminal device to send the first PUSCH and the second PUSCH is Type 1 transmission scheme. Optionally, the first indication information field may be an SRS resource set indicator field.

In some embodiments, when the first indication information field indicates a first state value, it may indicate that the terminal device adopts Type 1 transmission scheme. For example, the first state value may be a state value of 10 or a state value of 11.

For example, when the first indication information field indicates the state value of 10, the first SRI field and the first TPMI field may be associated with the first SRS resource set, and the second SRI field and the second TPMI field may be associated with the second SRS resource set.

For another example, when the first indication information field indicates the state value of 11, the first SRI field and the first TPMI field may be associated with the second SRS resource set, and the second SRI field and the second TPMI field may be associated with the first SRS resource set. Alternatively, the state value of 11 indicated by the first indication information field indicates the reserved state.

In some embodiments, when the first indication information field indicates a second state value, it may indicate that the terminal device adopts Type 2 transmission scheme. For example, the second state value may be a state value of 00 or a state value of 01.

For example, when the first indication information field indicates the state value of 00, the first SRI field and the first TPMI field may be associated with the first SRS resource set, and the second SRI field and the second TPMI field may be reserved fields, or the second SRI field and the second TPMI field may be absent.

For another example, when the first indication information field indicates the state value of 01, the first SRI field and the first TPMI field may be associated with the second SRS resource set, and the second SRI field and the second TPMI field may be reserved fields, or the second SRI field and the second TPMI field may be absent. Alternatively, when the first indication information field indicates the state value of 01, the second SRI field and the second TPMI field may be associated with the second SRS resource set, and the first SRI field and the first TPMI field may be reserved fields.

It may be noted that, in the foregoing embodiments, the second SRI field and the second TPMI field being absent may mean that the number of bits in the second SRI field and the second TPMI field is 0, or that the DCI does not contain the second SRI field and the second TPMI field.

In some embodiments, when the first indication information field indicates that the terminal device adopts Type 2 transmission scheme (for example, the first indication information field indicates the second state value), the terminal device can send a third PUSCH. Optionally, the third PUSCH may be associated with the first SRS resource set, and a third precoding matrix for the third PUSCH may belong to a second precoding matrix set.

Optionally, the first precoding matrix set may be a subset of the second precoding matrix set. For example, the first precoding matrix set may be obtained by removing the precoding matrix(s) that is not supported by the terminal device from the second precoding matrix set.

The foregoing embodiment illustrates in detail the first information and various fields in the first information. The first information will be further exemplified below in combination with various application scenarios.

In some embodiments, for Mode 1, the first information may be used for dynamic switching between the SDM scheme and the sTRP scheme. Optionally, the terminal device may receive RRC signaling, and the RRC signaling may be used for configuring the transmission scheme for the terminal device as the SDM scheme.

For example, the terminal device may receive the first information, and the first information may contain the first indication information field. When the first indication information field indicates the state value of "10" or "11", the terminal device can adopt the SDM scheme to send the first PUSCH and the second PUSCH, where the first PUSCH is associated with the first SRS resource set, and the second PUSCH is associated with the second SRS resource set.

The first information may further contain the first TPMI field, the second TPMI field, the first SRI field, and the second SRI field. The terminal device may determine a precoder for the first PUSCH and a precoder for the second PUSCH according to the first TPMI field, the second TPMI field, the first SRI field, and the second SRI field.

The number of antenna ports corresponding to a precoder indicated by the first TPMI field may be the same as the number of $P$ ports among the SRS ports of the SRS resource indicated by the first SRI field, the number of antenna ports corresponding to a precoder indicated by the second TPMI field may be the same as the number of $Q$ ports among the SRS ports of the SRS resource indicated by the second SRI field. In this case, the first SRI field and the first TPMI field may be associated with the first SRS resource set, and the second SRI field and the second TPMI field may be associated with the second SRS resource set. Alternatively, the first SRI field and the first TPMI field may be associated with the second SRS resource set, and the second SRI field and the second TPMI field may be associated with the first SRS resource set. The descriptions of $P$ and $Q$ are the same as those in the above, and the examples of the state value of 10 and the state value of 11 indicated by the first indication information field are the same as those in the above. In this case, the precoding matrix indicated by the first TPMI field and the precoding matrix indicated by the second TPMI field may belong to the first precoding matrix set.

For another example, when the first indication information field indicates the state value of "00" or the state value of "01", the terminal device may adopt the sTRP scheme to transmit the third PUSCH, and the terminal device may determine a precoder for the third PUSCH according to the first TPMI field and the first SRI field, or the terminal device may determine the precoder for the third PUSCH according to the second TPMI field and the second SRI field.

The number of antenna ports corresponding to the precoder indicated by the first TPMI field may be the same as the number of ports in the SRS ports of the SRS resource indicated by the first SRI. Alternatively, the number of antenna ports corresponding to the precoder indicated by the second TPMI field may be the same as the number of ports in the SRS ports of the SRS resource indicated by the second SRI. In this case, the precoding matrix indicated by the first TPMI field and the precoding matrix indicated by the second TPMI field belong to the second precoding matrix set.

In some embodiments, for Mode 1, the first information may be used for dynamic switching between the SFN scheme and the sTRP scheme.

For example, when the SFN scheme is adopted, the terminal device may determine the precoder for the first PUSCH and the precoder for the second PUSCH according to the first TPMI field, the second TPMI field (when the SFN scheme is adopted, the second TPMI field may indicate only the precoding matrix but not the number of transmission layers, and in this case, the number of transmission layers is the same as the number of transmission layers indicated by the first TPMI field), the first SRI field, and the second SRI field.

The number of antenna ports corresponding to the precoder indicated by the first TPMI field may be the same as the number of $P$ ports among the SRS ports of the SRS resource indicated by the first SRI, and the number of antenna ports corresponding to the precoder indicated by the second TPMI field may be the same as the number of $Q$ ports among the SRS ports of the SRS resource indicated by the second SRI. In this case, the first TPMI field and the first SRI field may be associated with the first SRS resource set, and the second TPMI field and the second SRI field may be associated with the second SRS resource set. Alternatively, the first TPMI field and the first SRI field may be associated with the second SRS resource set, and the second TPMI field and the second SRI field may be associated with the first SRS resource set. The descriptions of $P$ and $Q$ are the same as those in the above, and the examples of the state value of 10 and the state value of 11 indicated by the first SRI field are the same as those in the above. In this case, the precoding matrix indicated by the first TPMI field and the precoding matrix indicated by the second TPMI field may belong to the first precoding matrix set.

For another example, when the first indication information field indicates the state value of "00" or the state value of "01", the terminal device may adopt the sTRP scheme to transmit the third PUSCH, and the terminal device may determine the precoder for the third PUSCH according to the first TPMI field and the first SRI field, or the terminal device may determine the precoder for the third PUSCH according to the second TPMI field and the second SRI field. The number of antenna ports corresponding to the precoder indicated by the first TPMI field may be the same as the number of ports in the SRS port of the SRS resource indicated by the first SRI. Alternatively, the number of antenna ports corresponding to the precoder indicated by the second TPMI field may be the same as the number of ports in the SRS port of the SRS resource indicated by the second SRI. In this case, the precoding matrix indicated by the first TPMI field and the precoding matrix indicated by the second TPMI field belong to the second precoding matrix set.

In embodiments of the present disclosure, for Mode 1, the first information may also be used for the multi-TRP/panel transmission scheme scheduled through multiple DCI. In this case, the first TPMI field and the first SRI field may be carried in one first information (e.g., a first DCI), and the second TPMI field and the second SRI field may be carried in another first information (e.g., a second DCI). An example is given below.

For example, the terminal device may determine the precoder for the first PUSCH according to the first TPMI field and the first SRI field, and determine the precoder for the second PUSCH according to the second TPMI field and the second SRI.

The number of antenna ports corresponding to the precoder indicated by the first TPMI field may be the same as the number of $P$ ports among the SRS ports of the SRS resource indicated by the first SRI, and the number of antenna ports corresponding to the precoder indicated by the second TPMI field may be the same as the number of $Q$ ports among the SRS ports of the SRS resource indicated by the second SRI.

The first TPMI field and the first SRI field may be contained in the first DCI, and the second TPMI field and the second SRI field may be contained in the second DCI. The first PUSCH may be scheduled through the first DCI, and the second PUSCH may be scheduled through the second DCI. The first PUSCH and the second PUSCH may overlap in a time domain. In this case, the precoding matrix indicated by the first TPMI field and the precoding matrix indicated by the second TPMI field may belong to the first precoding matrix set.

Before the operations at S810, the method 800 can further include operations at S830 as follows.

At S830, the network device determines the first information.

For example, the network device can determine the first TPMI field, the second TPMI field, the first SRI field, the second SRI field, and the first indication information field that are in the first information.

Before the operations at S810, the method 800 can further include operations at S840 as follows.

At S840, the terminal device sends the second information and/or the third information to the network device.

Optionally, the second information may indicate a first maximum number of transmission layers supported by the terminal device when sending a PUSCH, and the third information may indicate a second maximum number of transmission layers supported by the terminal device when sending the PUSCH using Type 1 transmission scheme.

Optionally, the first maximum number of transmission layers may be the maximum number of transmission layers of a codebook-based PUSCH or the maximum number of transmission layers of a non-codebook-based PUSCH, and/or the second maximum number of transmission layers may be the maximum number of transmission layers of the codebook-based PUSCH or the maximum number of transmission layers of the non-codebook-based PUSCH.

For example, the second information and the third information may be exemplified as follows:

```
mimo-CB-PUSCH SEQUENCE {
```

```
...
maxNumberMIMO-LayersCB-PUSCH MIMO-LayersUL OPTIONAL,
maxNumberMIMO-LayersCB-PUSCH MIMO-LayersUL-multi-TRP OPTIONAL,
...
} OPTIONAL,
maxNumberMIMO-LayersNonCB-PUSCH MIMO-LayersUL OPTIONAL,
maxNumberMIMO-LayersNonCB-PUSCH MIMO-LayersUL-multi-TRP OPTIONAL,
```

In the above, *maxNumberMIMO-LayersCB-PUSCH MIMO-LayersUL* may be the second information corresponding to the codebook-based PUSCH transmission when the sTRP transmission scheme is adopted, *maxNumber-MIMO-LayersCB-PUSCH MIMO-LayersUL-multi-TRP* may be the third information corresponding to the codebook-based PUSCH transmission when the multi-TRP/panel transmission scheme is adopted, *maxNumberMIMO-Layers-NonCB-PUSCH MIMO-LayersUL OPTIONAL* may be the second information corresponding to the non-codebook-based PUSCH transmission when the sTRP transmission scheme is adopted, and *maxNumberMIMO-LayersNonCB-PUSCH MIMO-LayersUL-multi-TRP* may be the third information corresponding to the non-codebook-based PUSCH transmission when the multi-TRP/panel transmission scheme is adopted.

Optionally, the terminal device may send the second information and/or the third information through any one of: radio resource control (RRC) signaling, a media access control control element (MAC CE), a PUSCH, and uplink control information (UCI).

Further, the network device may determine the first information according to the second information and/or the third information.

For example, when the first maximum number of transmission layers is different from the second maximum number of transmission layers, the network device can determine $P$ ports among the SRS ports of the SRS resource (e.g., the first SRS resource) indicated by the first SRI field in the first information and $Q$ ports among the SRS ports of the SRS resource (e.g., the second SRS resource) indicated by the second SRI field in the first information, where $P$ and $Q$ satisfy any one of: $P$ and $Q$ being each less than or equal to $1/N$ of the maximum number of transmission layers, $P$ and $Q$ being each less than or equal to the maximum number of transmission layers, the sum of $P$ and $Q$ being equal to the maximum number of transmission layers, and the sum of $P$ and $Q$ being equal to twice the maximum number of transmission layers, where both $P$ and $Q$ are integers.

In embodiments of the present disclosure, the terminal device may send capability information to the network device, and the network device may configure an appropriate transmission parameter for the terminal device according to the capability information. The transmission parameter includes at least one of: the maximum number of transmission layers, a precoding matrix, the number of transmission layers, an SRS resource set, an SRS resource, or an SRS port.

For example, before the operations at S810, the method 800 can further include operations at S850 as follows.

At S850, the terminal device sends fourth information to the network device.

Optionally, the fourth information may indicate that the maximum number of transmission layers of each PUSCH sent using Type 1 transmission scheme does not exceed the first maximum number of transmission layers. Optionally, the fourth information may be used for reinterpreting the second information (for example, further limiting the first maximum number of transmission layers indicated by the second information).

The network device may determine the first information according to the fourth information. Alternatively, the network device may determine the first information according to the second information, the third information, and/or the fourth information.

In some embodiments, when the terminal device does not send the fourth information, the total number of transmission layers of multiple PUSCHs sent using Type 1 transmission scheme does not exceed the first maximum number of transmission layers, and a resource occupied by the first PUSCH overlaps a resource occupied by the second PUSCH by at least one resource element (RE).

It may be noted that, in embodiments of the present disclosure, the maximum number of transmission layers may refer to the maximum number of PUSCH transmission layers or the maximum number of multiple input multiple output (MIMO) layers.

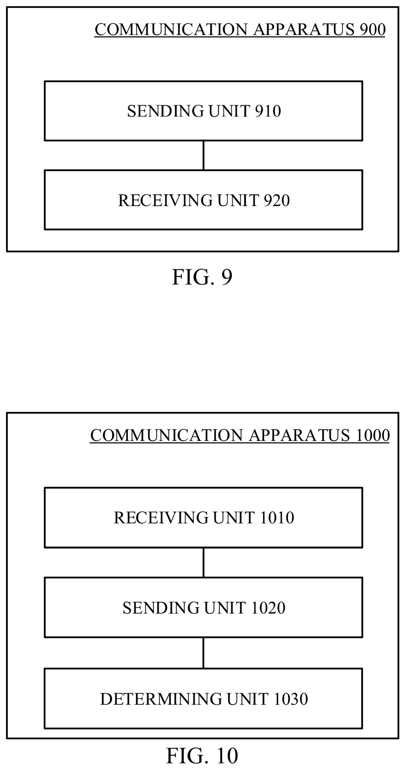

The method embodiments of the present disclosure are illustrated in detail above with reference to FIG. 1 to FIG. 8, and apparatus embodiments of the present disclosure will be illustrated in detail below with reference to FIG. 9 to FIG. 11. It may be understood that, illustrations of method embodiments and illustrations of apparatus embodiments correspond to each other, and therefore, for parts not illustrated in detail, reference can be made to the foregoing method embodiments.

FIG. 9 is a schematic structural diagram of a communication apparatus provided in embodiments of the present disclosure. As illustrated in FIG. 9, the apparatus 900 includes a sending unit 910. The sending unit 910 is configured to send a first PUSCH and a second PUSCH. The apparatus corresponds to N SRS resource sets, the first PUSCH is associated with a first SRS resource set among the $N$ SRS resource sets, the second PUSCH is associated with a second SRS resource set among the $N$ SRS resource sets, and the first SRS resource set is different from the second SRS resource set. The apparatus includes $M$ antenna ports. A first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ are integers greater than or equal to 2.

Optionally, the number of antenna ports corresponding to each precoding matrix in the first precoding matrix set is $M$ or $M/N$.

Optionally, a precoding matrix in the first precoding matrix set is used for single-layer PUSCH transmission using two antenna ports, and the first precoding matrix set contains:

$$\left\{\frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix}\right\}.$$

Optionally, the precoding matrix in the first precoding matrix set is used for two-layer PUSCH transmission using two antenna ports, and the first precoding matrix set contains:

$$\left\{\frac{1}{\sqrt{2}}\begin{bmatrix}1 & 0\\0 & 1\end{bmatrix}, \frac{1}{\sqrt{2}}\begin{bmatrix}1 & 1\\1 & -1\end{bmatrix}, \frac{1}{\sqrt{2}}\begin{bmatrix}1 & 1\\j & -j\end{bmatrix}\right\}.$$

Optionally, the precoding matrix in the first precoding matrix set is used for single-layer PUSCH transmission using four antenna ports, and the first precoding matrix set contains:

$$\left\{\frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix}\right\}.$$

Optionally, the precoding matrix in the first precoding matrix set is used for two-layer PUSCH transmission using four antenna ports, and the first precoding matrix set contains:

$$\left\{\frac{1}{\sqrt{2}}\begin{bmatrix}1 & 0\\0 & 1\\0 & 0\\0 & 0\end{bmatrix}, \frac{1}{\sqrt{2}}\begin{bmatrix}1 & 0\\0 & 0\\0 & 1\\0 & 0\end{bmatrix}, \frac{1}{\sqrt{2}}\begin{bmatrix}1 & 0\\0 & 0\\0 & 0\\0 & 1\end{bmatrix}, \frac{1}{\sqrt{2}}\begin{bmatrix}0 & 0\\1 & 0\\0 & 1\\0 & 0\end{bmatrix}, \frac{1}{\sqrt{2}}\begin{bmatrix}0 & 0\\1 & 0\\0 & 0\\0 & 1\end{bmatrix}, \frac{1}{\sqrt{2}}\begin{bmatrix}0 & 0\\0 & 0\\1 & 0\\0 & 1\end{bmatrix}\right\}.$$

Optionally, the first precoding matrix set supports transmission with a codebook subset type of partial and non-coherent.

Optionally, the apparatus 900 further includes a receiving unit 920. The receiving unit 920 is configured to receive first information, where the first information contains a first TPMI field and a second TPMI field, the first TPMI field indicates the first precoding matrix, and the second TPMI field indicates the second precoding matrix. The sending unit is specifically configured to send the first PUSCH and the second PUSCH according to the first information.

Optionally, the first TPMI field indicates an index of the first precoding matrix in the first precoding matrix set and the number of transmission layers corresponding to the first precoding matrix, and the second TPMI field indicates an index of the second precoding matrix in the first precoding matrix set and the number of transmission layers corresponding to the second precoding matrix.

Optionally, the first information further contains a first SRI field and a second SRI field, the number of antenna ports corresponding to the first precoding matrix indicated by the first TPMI field is the same as the number of $P$ ports among SRS ports of an SRS resource indicated by the first SRI field, the number of antenna ports corresponding to the second precoding matrix indicated by the second TPMI field is the same as the number of $Q$ ports among SRS ports of an SRS resource indicated by the second SRI field, and both $P$ and $Q$ are integers.

Optionally, $P$ and $Q$ are each less than or equal to $1/N$ of the maximum number of transmission layers, or $P$ and $Q$ are each less than or equal to the maximum number of transmission layers.

Optionally, a sum of $P$ and $Q$ is equal to the maximum number of transmission layers, or the sum of $P$ and $Q$ is equal to twice the maximum number of transmission layers.

Optionally, the first information further contains a first indication information field, and the first indication information field indicates that a transmission scheme for the apparatus to send the first PUSCH and the second PUSCH is Type 1 transmission scheme.

Optionally, the first indication information field indicates a state value of 10 or a state value of 11.

Optionally, when the first indication information field indicates the state value of 10, the first SRI field and the first TPMI field are associated with the first SRS resource set, and the second SRI field and the second TPMI field are associated with the second SRS resource set.

Optionally, when the first indication information field indicates the state value of 11, the first SRI field and the first TPMI field are associated with the second SRS resource set, and the second SRI field and the second TPMI field are associated with the first SRS resource set; or the first indication information field indicates the state value of 11 indicating a reserved state.

Optionally, the sending unit 910 is further configured to send a third PUSCH when the first indication information field indicates that a transmission scheme for the apparatus to send the third PUSCH is Type 2 transmission scheme, where the third PUSCH is associated with the first SRS resource set, and a third precoding matrix for the third PUSCH belongs to a second precoding matrix set.

Optionally, the first indication information field indicates 00 or 01.

Optionally, when the first indication information field indicates 00, the first SRI field and the first TPMI field are associated with the first SRS resource set; and the second SRI field and the second TPMI field are reserved fields, or the second SRI field and the second TPMI field are absent.

Optionally, when the first indication information field indicates 01, the first SRI field and the first TPMI field are associated with the second SRS resource set; and the second SRI field and the second TPMI field are reserved fields, or the second SRI field and the second TPMI field are absent.

Optionally, the first precoding matrix set is a subset of the second precoding matrix set.

Optionally, the first information is DCI, and a format of the first information is DCI format 0-1 or DCI format 0-2.

Optionally, the sending unit 910 is further configured to send second information and/or third information, where the second information indicates a first maximum number of transmission layers supported by the apparatus when sending a PUSCH, and the third information indicates a second maximum number of transmission layers supported by the apparatus when sending the PUSCH using Type 1 transmission scheme.

Optionally, the first maximum number of transmission layers is the maximum number of transmission layers of a codebook-based PUSCH or the maximum number of transmission layers of a non-codebook-based PUSCH, and/or the second maximum number of transmission layers is the maximum number of transmission layers of the codebook-based PUSCH or the maximum number of transmission layers of the non-codebook-based PUSCH.

Optionally, the sending unit 910 is specifically configured to send the second information and/or the third information through any one of: RRC signaling, an MAC CE, a PUSCH, and UCI.

Optionally, the sending unit 910 is specifically configured to send fourth information, where the fourth information indicates that the maximum number of transmission layers of each PUSCH sent using Type 1 transmission scheme does not exceed the first maximum number of transmission layers.

Optionally, when the apparatus does not send fourth information, a total number of transmission layers of multiple PUSCHs sent using Type 1 transmission scheme does not exceed the first maximum number of transmission layers, and a resource occupied by the first PUSCH overlaps a resource occupied by the second PUSCH by at least one RE.

FIG. 10 is a schematic structural diagram of a communication apparatus provided in embodiments of the present disclosure. The communication apparatus 1000 in FIG. 10 includes a receiving unit 1010. The receiving unit 1010 is configured to receive a first PUSCH and a second PUSCH, where a terminal device corresponds to $N$ SRS resource sets, the first PUSCH is associated with a first SRS resource set among the $N$ SRS resource sets, the second PUSCH is associated with a second SRS resource set among the $N$ SRS resource sets, the first SRS resource set is different from the second SRS resource set, the terminal device includes $M$ antenna ports, a first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ are integers greater than or equal to 2.

Optionally, the number of antenna ports corresponding to each precoding matrix in the first precoding matrix set is $M$ or $M/N$.

Optionally, a precoding matrix in the first precoding matrix set is used for single-layer PUSCH transmission using two antenna ports, and the first precoding matrix set contains:

$$\left\{ \frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix} \right\}.$$

Optionally, the precoding matrix in the first precoding matrix set is used for two-layer PUSCH transmission using twenty-eight antenna ports, and the first precoding matrix set contains: $\left\{ \frac{1}{\sqrt{2}}\begin{bmatrix}1 & 0\\0 & 1\end{bmatrix}, \frac{1}{\sqrt{2}}\begin{bmatrix}1 & 1\\1 & -1\end{bmatrix}, \frac{1}{\sqrt{2}}\begin{bmatrix}1 & 1\\j & -j\end{bmatrix} \right\}.$

Optionally, the precoding matrix in the first precoding matrix set is used for single-layer PUSCH transmission using four antenna ports, and the first precoding matrix set contains:

$$\left\{ \frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix} \right\}.$$

Optionally, the precoding matrix in the first precoding matrix set is used for two-layer PUSCH transmission using four antenna ports, and the first precoding matrix set contains:

$$\left\{ \frac{1}{\sqrt{2}}\begin{bmatrix}1&0\\0&1\\0&0\\0&0\end{bmatrix}, \frac{1}{\sqrt{2}}\begin{bmatrix}1&0\\0&0\\0&1\\0&0\end{bmatrix}, \frac{1}{\sqrt{2}}\begin{bmatrix}1&0\\0&0\\0&0\\0&1\end{bmatrix}, \frac{1}{\sqrt{2}}\begin{bmatrix}0&0\\1&0\\0&1\\0&0\end{bmatrix}, \frac{1}{\sqrt{2}}\begin{bmatrix}0&0\\1&0\\0&0\\0&1\end{bmatrix}, \frac{1}{\sqrt{2}}\begin{bmatrix}0&0\\0&0\\1&0\\0&1\end{bmatrix} \right\}.$$

Optionally, the first precoding matrix set supports transmission with a codebook subset type of partial and non-coherent.

Optionally, the apparatus 1000 further includes a sending unit 1020. The sending unit 1020 is configured to send first information, where the first information contains a first TPMI field and a second TPMI field, the first TPMI field indicates the first precoding matrix, and the second TPMI field indicates the second precoding matrix.

Optionally, the first TPMI field indicates an index of the first precoding matrix in the first precoding matrix set and the number of transmission layers corresponding to the first precoding matrix, and the second TPMI field indicates an index of the second precoding matrix in the first precoding matrix set and the number of transmission layers corresponding to the second precoding matrix.

Optionally, the first information further contains a first SRI field and a second SRI field, the number of antenna ports corresponding to the first precoding matrix indicated by the first TPMI field is the same as the number of $P$ ports among SRS ports of an SRS resource indicated by the first SRI field, the number of antenna ports corresponding to the second precoding matrix indicated by the second TPMI field is the same as the number of $Q$ ports among SRS ports of an SRS resource indicated by the second SRI field, and both $P$ and $Q$ are integers.

Optionally, $P$ and $Q$ are each less than or equal to $1/N$ of the maximum number of transmission layers, or $P$ and $Q$ are each less than or equal to the maximum number of transmission layers.

Optionally, a sum of $P$ and $Q$ is equal to the maximum number of transmission layers, or the sum of $P$ and $Q$ is equal to twice the maximum number of transmission layers.

Optionally, the first information further contains a first indication information field, and the first indication information field indicates that a transmission scheme for the terminal device to send the first PUSCH and the second PUSCH is Type 1 transmission scheme.

Optionally, the first indication information field indicates a state value of 10 or a state value of 11.

Optionally, when the first indication information field indicates the state value of 10, the first SRI field and the first TPMI field are associated with the first SRS resource set, and the second SRI field and the second TPMI field are associated with the second SRS resource set.

Optionally, when the first indication information field indicates the state value of 11, the first SRI field and the first TPMI field are associated with the second SRS resource set, and the second SRI field and the second TPMI field are associated with the first SRS resource set; or the first indication information field indicates the state value of 11 indicating a reserved state.

Optionally, the receiving unit 1010 is further configured to receive a third PUSCH when the first indication information field indicates that a transmission scheme for the terminal device to send the third PUSCH is Type 2 transmission scheme, where the third PUSCH is associated with the first SRS resource set, and a third precoding matrix for the third PUSCH belongs to a second precoding matrix set.

Optionally, the first indication information field indicates 00 or 01.

Optionally, when the first indication information field indicates 00, the first SRI field and the first TPMI field are associated with the first SRS resource set; and the second SRI field and the second TPMI field are reserved fields, or the second SRI field and the second TPMI field are absent.

Optionally, when the first indication information field indicates 01, the first SRI field and the first TPMI field are associated with the second SRS resource set; and the second SRI field and the second TPMI field are reserved fields, or the second SRI field and the second TPMI field are absent.

Optionally, the first precoding matrix set is a subset of the second precoding matrix set.

Optionally, the first information is DCI, and a format of the first information is DCI format 0-1 or DCI format 0-2.

Optionally, the receiving unit 1010 is further configured to receive second information and/or third information, where the second information indicates a first maximum number of transmission layers supported by the terminal device when sending a PUSCH, and the third information indicates a second maximum number of transmission layers supported by the terminal device when sending the PUSCH using Type 1 transmission scheme.

Optionally, the first maximum number of transmission layers is the maximum number of transmission layers of a codebook-based PUSCH or the maximum number of transmission layers of a non-codebook-based PUSCH, and/or the second maximum number of transmission layers is the maximum number of transmission layers of the codebook-based PUSCH or the maximum number of transmission layers of the non-codebook-based PUSCH.

Optionally, the apparatus 1000 further includes a determining unit 1030. The determining unit 1030 is configured to determine the first information according to the second information and/or the third information.

Optionally, the determining unit 1030 is specifically configured to, when the first maximum number of transmission layers is different from the second maximum number of transmission layers, determine $P$ ports among SRS ports of an SRS resource indicated by a first SRI field in the first information and $Q$ ports among SRS ports of an SRS resource indicated by a second SRI field in the first information, where $P$ and $Q$ satisfy any one of: $P$ and $Q$ being each less than or equal to $1/N$ of the maximum number of transmission layers, $P$ and $Q$ being each less than or equal to the maximum number of transmission layers, a sum of $P$ and $Q$ being equal to the maximum number of transmission layers, and the sum of $P$ and $Q$ being equal to twice the maximum number of transmission layers, where both $P$ and $Q$ are integers.

Optionally, the receiving unit 1010 is specifically configured to receive the second information and/or the third information through any one of: RRC signaling, an MAC CE, a PUSCH, and UCI.

Optionally, the receiving unit 1010 is further configured to receive fourth information, where the fourth information indicates that the maximum number of transmission layers of each PUSCH sent using Type 1 transmission scheme does not exceed the first maximum number of transmission layers.

Optionally, the apparatus 1000 further includes a determining unit 1030. The determining unit 1030 is configured to determine the first information according to the second information, the third information, and/or the fourth information.

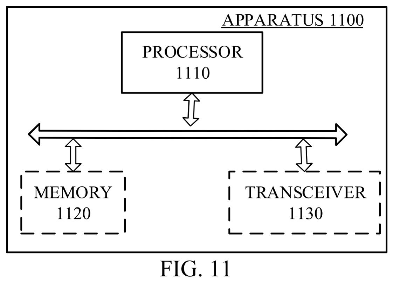

FIG. 11 is a schematic structural diagram of an apparatus provided in embodiments of the present disclosure. Dotted lines illustrated in FIG. 11 indicate that a unit or a module is optional. The apparatus 1100 can be configured to implement the method illustrated in the method embodiments. The apparatus 1100 may be a chip or a communication apparatus.

The apparatus 1100 may include one or more processors 1110. The processor 1110 may support the apparatus 1100 to implement the method illustrated in the method embodiments. The processor 1110 may be a general-purpose processor or a special-purpose processor. For example, the processor may be a central processing unit (CPU). Alternatively, the processor may also be another general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor, the processor may be any conventional processor, etc.

The apparatus 1100 may further include one or more memories 1120. The memory 1120 is configured to store a program that, when executed by the processor 1110, causes the processor 1110 to perform the method illustrated in the method embodiments. The memory 1120 may be independent of the processor 1110 or may be integrated into the processor 1110.

The apparatus 1100 may further include a transceiver 1130. The processor 1110 may communicate with other devices or chips through the transceiver 1130. For example, the processor 1110 may send data to and receive data from other devices or chips through the transceiver 1130.

A computer-readable storage medium is further provided in embodiments of the present disclosure. The computer-readable storage medium is configured to store a program. The computer-readable storage medium is applicable to the communication apparatus provided in embodiments of the present disclosure. The program causes a computer to perform the method performed by the communication apparatus in various embodiments of the present disclosure.

A computer program product is further provided in embodiments of the present disclosure. The computer program product includes a program. The computer program product is applicable to the communication apparatus provided in embodiments of the present disclosure. The program causes a computer to perform the method performed by the communication apparatus in various embodiments of the present disclosure.

A computer program is further provided in embodiments of the present disclosure. The computer program is applicable to the communication apparatus provided in embodiments of the present disclosure. The computer program causes a computer to perform the method performed by the communication apparatus in various embodiments of the present disclosure.

It may be understood that, in embodiments of the present disclosure, "B corresponding to A" indicates that B is associated with A, and B may be determined according to A. However, it may be further understood that, "determine B according to A" does not mean that B is determined according to A only, and B may also be determined according to A and/or other information.

It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, in various embodiments of the present disclosure, the magnitude of a sequence number of each of the foregoing processes does not mean an execution order, and an execution order of each process should be determined according to a function and an internal logic of the process, which shall not constitute any limitation to an implementation process of embodiments of the present disclosure.

It will be appreciated that, the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the present disclosure are performed. The computer can be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium may be any computer-accessible usable medium or a data storage device, such as a server, a data center, etc., that integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

**Claims**

1. A communication method, comprising:

   sending, by a terminal device, a first physical uplink shared channel (PUSCH) and a second PUSCH, wherein the terminal device corresponds to $N$ sounding reference signal (SRS) resource sets, the first PUSCH is associated with a first SRS resource set among the $N$ SRS resource sets, the second PUSCH is associated with a second SRS resource set among the $N$ SRS resource sets, the first SRS resource set is different from the second SRS resource set, the terminal device comprises $M$ antenna ports, a first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ are each an integer greater than or equal to 2.

2. The method of claim 1, wherein a number of antenna ports corresponding to each precoding matrix in the first precoding matrix set is $M$ or $M/N$.

3. The method of claim 2, wherein a precoding matrix in the first precoding matrix set is used for single-layer PUSCH transmission using two antenna ports, and the first precoding matrix set contains:

$$\left\{ \frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix} \right\}.$$

4. The method of claim 2, wherein a precoding matrix in the first precoding matrix set is used for two-layer PUSCH transmission using two antenna ports, and the first precoding matrix set contains:

$$\left\{ \frac{1}{\sqrt{2}}\begin{bmatrix}1&0\\0&1\end{bmatrix}, \frac{1}{\sqrt{2}}\begin{bmatrix}1&1\\1&-1\end{bmatrix}, \frac{1}{\sqrt{2}}\begin{bmatrix}1&1\\j&-j\end{bmatrix} \right\}.$$

5. The method of claim 2, wherein a precoding matrix in the first precoding matrix set is used for single-layer PUSCH transmission using four antenna ports, and the first precoding matrix set contains:

$$\left\{ \frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix} \right\}.$$

6. The method of claim 2, wherein a precoding matrix in the first precoding matrix set is used for two-layer PUSCH transmission using four antenna ports, and the first precoding matrix set contains:

$$\left\{ \frac{1}{\sqrt{2}}\begin{bmatrix}1&0\\0&1\\0&0\\0&0\end{bmatrix}, \frac{1}{\sqrt{2}}\begin{bmatrix}1&0\\0&0\\0&1\\0&0\end{bmatrix}, \frac{1}{\sqrt{2}}\begin{bmatrix}1&0\\0&0\\0&0\\0&1\end{bmatrix}, \frac{1}{\sqrt{2}}\begin{bmatrix}0&0\\1&0\\0&1\\0&0\end{bmatrix}, \frac{1}{\sqrt{2}}\begin{bmatrix}0&0\\1&0\\0&0\\0&1\end{bmatrix}, \frac{1}{\sqrt{2}}\begin{bmatrix}0&0\\0&0\\1&0\\0&1\end{bmatrix} \right\}.$$

7. The method of claim 5 or 6, wherein the first precoding matrix set supports transmission with a codebook subset type of partial and non-coherent.

8. The method of any one of claims 1 to 7, wherein the method further comprises:

receiving, by the terminal device, first information, wherein the first information contains a first precoding information and number of layers (TPMI) field and a second TPMI field, the first TPMI field indicates the first precoding matrix, and the second TPMI field indicates the second precoding matrix; and
sending, by the terminal device, the first PUSCH and the second PUSCH comprises:
sending, by the terminal device, the first PUSCH and the second PUSCH according to the first information.

9. The method of claim 8, wherein the first TPMI field indicates an index of the first precoding matrix in the first precoding matrix set and a number of transmission layers corresponding to the first precoding matrix, and the second TPMI field indicates an index of the second precoding matrix in the first precoding matrix set and a number of transmission layers corresponding to the second precoding matrix.

10. The method of claim 8 or 9, wherein the first information further contains a first SRS resource indicator (SRI) field and a second SRI field, a number of antenna ports corresponding to the first precoding matrix indicated by the first TPMI field is the same as a number of $P$ ports among SRS ports of an SRS resource indicated by the first SRI field, a number of antenna ports corresponding to the second precoding matrix indicated by the second TPMI field is the same as a number of $Q$ ports among SRS ports of an SRS resource indicated by the second SRI field, and both $P$ and $Q$ are integers.

11. The method of claim 10, wherein $P$ and $Q$ are each less than or equal to $1/N$ of a maximum number of transmission layers, or $P$ and $Q$ are each less than or equal to the maximum number of transmission layers.

12. The method of claim 10, wherein a sum of $P$ and $Q$ is equal to a maximum number of transmission layers, or the sum of $P$ and $Q$ is equal to twice the maximum number of transmission layers.

13. The method of any one of claims 8 to 12, wherein the first information further contains a first indication information field, and the first indication information field indicates that a transmission scheme for the terminal device to send the first PUSCH and the second PUSCH is Type 1 transmission scheme.

14. The method of claim 13, wherein the first indication information field indicates a state value of 10 or a state value of 11.

15. The method of claim 14, wherein when the first indication information field indicates the state value of 10, a first SRI field and the first TPMI field are associated with the first SRS resource set, and a second SRI field and the second TPMI field are associated with the second SRS resource set.

16. The method of claim 14 or 15, wherein when the first indication information field indicates the state value of 11, a first SRI field and the first TPMI field are associated with the second SRS resource set, and a second SRI field and the second TPMI field are associated with the first SRS resource set; or the first indication information field indicates the state value of 11 indicating a reserved state.

17. The method of any one of claims 13 to 16, further comprising:
sending, by the terminal device, a third PUSCH when the first indication information field indicates that a transmission scheme for the terminal device to send the third PUSCH is Type 2 transmission scheme, wherein the third PUSCH is associated with the first SRS resource set, and a third precoding matrix for the third PUSCH belongs to a second precoding matrix set.

18. The method of claim 17, wherein the first indication information field indicates 00 or 01.

19. The method of claim 18, wherein when the first indication information field indicates 00, a first SRI field and the first TPMI field are associated with the first SRS resource set; and a second SRI field and the second TPMI field are reserved fields, or the second SRI field and the second TPMI field are absent.

20. The method of claim 18, wherein when the first indication information field indicates 01, a first SRI field and the first TPMI field are associated with the second SRS resource set; and a second SRI field and the second TPMI field are reserved fields, or the second SRI field and the second TPMI field are absent.

21. The method of any one of claims 17 to 20, wherein the first precoding matrix set is a subset of the second precoding matrix set.

22. The method of any one of claims 8 to 21, wherein the first information is downlink control information (DCI), and a format of the first information is DCI format 0-1 or DCI format 0-2.

23. The method of any one of claims 1 to 22, further comprising:
sending, by the terminal device, second information and/or third information, wherein the second information indicates a first maximum number of transmission layers supported by the terminal device when sending a PUSCH, and the third information indicates a second maximum number of transmission layers supported by the terminal device when sending the PUSCH using Type 1 transmission scheme.

24. The method of claim 23, wherein the first maximum number of transmission layers is a maximum number of transmission layers of a codebook-based PUSCH or a maximum number of transmission layers of a non-codebook-based PUSCH, and/or the second maximum number of transmission layers is the maximum number of transmission layers of the codebook-based PUSCH or the maximum number of transmission layers of the non-codebook-based PUSCH.

25. The method of claim 23 or 24, wherein sending, by the terminal device, the second information and/or the third information comprises:
sending, by the terminal device, the second information and/or the third information through any one of:
radio resource control (RRC) signaling, a media access control control element (MAC CE), a PUSCH, and uplink control information (UCI).

26. The method of any one of claims 23 to 25, further comprising:
sending, by the terminal device, fourth information, wherein the fourth information indicates that a maximum number of transmission layers of each PUSCH sent using Type 1 transmission scheme does not exceed the first maximum number of transmission layers.

27. The method of any one of claims 23 to 25, wherein when the terminal device does not send fourth information, a total number of transmission layers of a plurality of PUSCHs sent using Type 1 transmission scheme does not exceed the first maximum number of transmission layers, and a resource occupied by the first PUSCH overlaps a resource occupied by the second PUSCH by at least one resource element (RE).

28. A communication method, comprising:

receiving, by a network device, a first physical uplink shared channel (PUSCH) and a second PUSCH, wherein a terminal device corresponds to $N$ sounding reference signal (SRS) resource sets, the first PUSCH is associated with a first SRS resource set among the $N$ SRS resource sets, the second PUSCH is associated with a second SRS resource set among the $N$ SRS resource sets, the first SRS resource set is different from the second SRS resource set, the terminal device comprises $M$ antenna ports, a first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ each are an integer greater than or equal to 2.

29. The method of claim 28, wherein a number of antenna ports corresponding to each precoding matrix in the first precoding matrix set is $M$ or $M/N$.

30. The method of claim 29, wherein a precoding matrix in the first precoding matrix set is used for single-layer PUSCH transmission using two antenna ports, and the first precoding matrix set contains:
$$\left\{ \frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix} \right\}.$$

31. The method of claim 29, wherein a precoding matrix in the first precoding matrix set is used for two-layer PUSCH transmission using twenty-eight antenna ports, and the first precoding matrix set contains:
$$\left\{ \frac{1}{\sqrt{2}}\begin{bmatrix}1&0\\0&1\end{bmatrix}, \frac{1}{\sqrt{2}}\begin{bmatrix}1&1\\1&-1\end{bmatrix}, \frac{1}{\sqrt{2}}\begin{bmatrix}1&1\\j&-j\end{bmatrix} \right\}.$$

32. The method of claim 29, wherein a precoding matrix in the first precoding matrix set is used for single-layer PUSCH transmission using four antenna ports, and the first precoding matrix set contains:
$$\left\{ \frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix} \right\}.$$

33. The method of claim 29, wherein a precoding matrix in the first precoding matrix set is used for two-layer PUSCH transmission using four antenna ports, and the first precoding matrix set contains:
$$\left\{ \frac{1}{\sqrt{2}}\begin{bmatrix}1&0\\0&1\\0&0\\0&0\end{bmatrix}, \frac{1}{\sqrt{2}}\begin{bmatrix}1&0\\0&0\\0&1\\0&0\end{bmatrix}, \frac{1}{\sqrt{2}}\begin{bmatrix}1&0\\0&0\\0&0\\0&1\end{bmatrix}, \frac{1}{\sqrt{2}}\begin{bmatrix}0&0\\1&0\\0&1\\0&0\end{bmatrix}, \frac{1}{\sqrt{2}}\begin{bmatrix}0&0\\1&0\\0&0\\0&1\end{bmatrix}, \frac{1}{\sqrt{2}}\begin{bmatrix}0&0\\0&0\\1&0\\0&1\end{bmatrix} \right\}.$$

34. The method of claim 32 or 33, wherein the first precoding matrix set supports transmission with a codebook subset type of partial and non-coherent.

35. The method of any one of claims 28 to 34, further comprising:
sending, by the network device, first information, wherein the first information contains a first precoding information and number of layers (TPMI) field and a second TPMI field, the first TPMI field indicates the first precoding matrix, and the second TPMI field indicates the second precoding matrix.

36. The method of claim 35, wherein the first TPMI field indicates an index of the first precoding matrix in the first precoding matrix set and a number of transmission layers corresponding to the first precoding matrix, and the second TPMI field indicates an index of the second precoding matrix in the first precoding matrix set and a number of transmission layers corresponding to the second precoding matrix.

37. The method of claim 35 or 36, wherein the first information further contains a first SRS resource indicator (SRI) field and a second SRI field, a number of antenna ports corresponding to the first precoding matrix indicated by the first TPMI field is the same as a number of $P$ ports among SRS ports of an SRS resource indicated by the first SRI field, a number of antenna ports corresponding to the second precoding matrix indicated by the second TPMI field is the same as a number of $Q$ ports among SRS ports of an SRS resource indicated by the second SRI field, and both $P$ and $Q$ are integers.

38. The method of claim 37, wherein $P$ and $Q$ are each less than or equal to $1/N$ of a maximum number of transmission layers, or $P$ and $Q$ are each less than or equal to the maximum number of transmission layers.

39. The method of claim 37, wherein a sum of $P$ and $Q$ is equal to a maximum number of transmission layers, or the sum of $P$ and $Q$ is equal to twice the maximum number of transmission layers.

40. The method of any one of claims 35 to 39, wherein the first information further contains a first indication information field, and the first indication information field indicates that a transmission scheme for the terminal device to send the first PUSCH and the second PUSCH is Type 1 transmission scheme.

41. The method of claim 40, wherein the first indication information field indicates a state value of 10 or a state value of 11.

42. The method of claim 41, wherein when the first indication information field indicates the state value of 10, a first SRI field and the first TPMI field are associated with the first SRS resource set, and a second SRI field and the second TPMI field are associated with the second SRS resource set.

43. The method of claim 41 or 42, wherein when the first indication information field indicates the state value of 11, a first SRI field and the first TPMI field are associated with the second SRS resource set, and a second SRI field and the second TPMI field are associated with the first SRS resource set; or the first indication information field indicates the state value of 11 indicating a reserved state.

44. The method of any one of claims 40 to 43, further comprising:
receiving, by the network device, a third PUSCH when the first indication information field indicates that a transmission scheme for the terminal device to send the third PUSCH is Type 2 transmission scheme, wherein the third PUSCH is associated with the first SRS resource set, and a third precoding matrix for the third PUSCH belongs to a second precoding matrix set.

45. The method of claim 44, wherein the first indication information field indicates 00 or 01.

46. The method of claim 45, wherein when the first indication information field indicates 00, a first SRI field and the first TPMI field are associated with the first SRS resource set; and a second SRI field and the second TPMI field are reserved fields, or the second SRI field and the second TPMI field are absent.

47. The method of claim 45, wherein when the first indication information field indicates 01, a first SRI field and the first TPMI field are associated with the second SRS resource set; and a second SRI field and the second TPMI field are reserved fields, or the second SRI field and the second TPMI field are absent.

48. The method of any one of claims 44 to 47, wherein the first precoding matrix set is a subset of the second precoding matrix set.

49. The method of any one of claims 35 to 48, wherein the first information is downlink control information (DCI), and a format of the first information is DCI format 0-1 or DCI format 0-2.

50. The method of any one of claims 35 to 49, further comprising:
receiving, by the network device, second information and/or third information, wherein the second information indicates a first maximum number of transmission layers supported by the terminal device when sending a PUSCH, and the third information indicates a second maximum number of transmission layers supported by the terminal device when sending the PUSCH using Type 1 transmission scheme.

**51.** The method of claim 50, wherein the first maximum number of transmission layers is a maximum number of transmission layers of a codebook-based PUSCH or a maximum number of transmission layers of a non-codebook-based PUSCH, and/or the second maximum number of transmission layers is the maximum number of transmission layers of the codebook-based PUSCH or the maximum number of transmission layers of the non-codebook-based PUSCH.

**52.** The method of claim 50 or 51, further comprising:
determining, by the network device, the first information according to the second information and/or the third information.

**53.** The method of claim 52, wherein determining, by the network device, the first information according to the second information and/or the third information comprises:
when the first maximum number of transmission layers is different from the second maximum number of transmission layers, determining, by the network device, $P$ ports among SRS ports of an SRS resource indicated by a first SRI field in the first information and $Q$ ports among SRS ports of an SRS resource indicated by a second SRI field in the first information, wherein $P$ and $Q$ satisfy any one of:

$P$ and $Q$ being each less than or equal to $1/N$ of a maximum number of transmission layers,
$P$ and $Q$ being each less than or equal to the maximum number of transmission layers,
a sum of $P$ and $Q$ being equal to the maximum number of transmission layers, and
the sum of $P$ and $Q$ being equal to twice the maximum number of transmission layers,
wherein both $P$ and $Q$ are integers.

**54.** The method of any one of claims 50 to 53, wherein receiving, by the network device, the second information and/or the third information comprises:
receiving, by the network device, the second information and/or the third information through any one of:
radio resource control (RRC) signaling, a media access control control element (MAC CE), a PUSCH, and uplink control information (UCI).

**55.** The method of any one of claims 50 to 54, further comprising:
receiving, by the network device, fourth information, wherein the fourth information indicates that a maximum number of transmission layers of each PUSCH sent using Type 1 transmission scheme does not exceed the first maximum number of transmission layers.

**56.** The method of claim 55, further comprising:
determining, by the network device, the first information according to the second information, the third information, and/or the fourth information.

**57.** A communication apparatus, comprising:
a sending unit configured to send a first physical uplink shared channel (PUSCH) and a second PUSCH, wherein the terminal device corresponds to $N$ sounding reference signal (SRS) resource sets, the first PUSCH is associated with a first SRS resource set among the $N$ SRS resource sets, the second PUSCH is associated with a second SRS resource set among the $N$ SRS resource sets, the first SRS resource set is different from the second SRS resource set, the terminal device comprises $M$ antenna ports, a first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ each are an integer greater than or equal to 2.

**58.** The apparatus of claim 57, wherein a number of antenna ports corresponding to each precoding matrix in the first precoding matrix set is $M$ or $M/N$.

**59.** The apparatus of claim 58, wherein a precoding matrix in the first precoding matrix set is used for single-layer PUSCH transmission using two antenna ports, and the first precoding matrix set contains:

$$\left\{ \frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix}\right\}..$$

**60.** The apparatus of claim 58, wherein a precoding matrix in the first precoding matrix set is used for two-layer PUSCH transmission using two antenna ports, and the first precoding matrix set contains:

$$\left\{\frac{1}{\sqrt{2}}\begin{bmatrix}1 & 0\\0 & 1\end{bmatrix}, \frac{1}{\sqrt{2}}\begin{bmatrix}1 & 1\\1 & -1\end{bmatrix}, \frac{1}{\sqrt{2}}\begin{bmatrix}1 & 1\\j & -j\end{bmatrix}\right\}.$$

61. The apparatus of claim 58, wherein a precoding matrix in the first precoding matrix set is used for single-layer PUSCH transmission using four antenna ports, and the first precoding matrix set contains:

$$\left\{\frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \right.$$

$$\left.\frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix}\right\}.$$

62. The apparatus of claim 58, wherein a precoding matrix in the first precoding matrix set is used for two-layer PUSCH transmission using four antenna ports, and the first precoding matrix set contains:

$$\left\{\frac{1}{\sqrt{2}}\begin{bmatrix}1 & 0\\0 & 1\\0 & 0\\0 & 0\end{bmatrix}, \frac{1}{\sqrt{2}}\begin{bmatrix}1 & 0\\0 & 0\\0 & 1\\0 & 0\end{bmatrix}, \frac{1}{\sqrt{2}}\begin{bmatrix}1 & 0\\0 & 0\\0 & 0\\0 & 1\end{bmatrix}, \frac{1}{\sqrt{2}}\begin{bmatrix}0 & 0\\1 & 0\\0 & 1\\0 & 0\end{bmatrix}, \frac{1}{\sqrt{2}}\begin{bmatrix}0 & 0\\1 & 0\\0 & 0\\0 & 1\end{bmatrix}, \frac{1}{\sqrt{2}}\begin{bmatrix}0 & 0\\0 & 0\\1 & 0\\0 & 1\end{bmatrix}\right\}.$$

63. The apparatus of claim 61 or 62, wherein the first precoding matrix set supports transmission with a codebook subset type of partial and non-coherent.

64. The apparatus of any one of claims 57 to 63, wherein the apparatus further comprises:

a receiving unit configured to receive first information, wherein the first information contains a first precoding information and number of layers (TPMI) field and a second TPMI field, the first TPMI field indicates the first precoding matrix, and the second TPMI field indicates the second precoding matrix; and
the sending unit is specifically configured to send the first PUSCH and the second PUSCH according to the first information.

65. The apparatus of claim 64, wherein the first TPMI field indicates an index of the first precoding matrix in the first precoding matrix set and a number of transmission layers corresponding to the first precoding matrix, and the second TPMI field indicates an index of the second precoding matrix in the first precoding matrix set and a number of transmission layers corresponding to the second precoding matrix.

66. The apparatus of claim 64 or 65, wherein the first information further contains a first SRS resource indicator (SRI) field and a second SRI field, a number of antenna ports corresponding to the first precoding matrix indicated by the first TPMI field is the same as a number of $P$ ports among SRS ports of an SRS resource indicated by the first SRI field, a number of antenna ports corresponding to the second precoding matrix indicated by the second TPMI field is the same as a number of $Q$ ports among SRS ports of an SRS resource indicated by the second SRI field, and both $P$ and $Q$ are integers.

67. The apparatus of claim 66, wherein $P$ and $Q$ are each less than or equal to $1/N$ of a maximum number of transmission layers, or $P$ and $Q$ are each less than or equal to the maximum number of transmission layers.

68. The apparatus of claim 66, wherein a sum of $P$ and $Q$ is equal to a maximum number of transmission layers, or the sum of $P$ and $Q$ is equal to twice the maximum number of transmission layers.

69. The apparatus of any one of claims 64 to 68, wherein the first information further contains a first indication information field, and the first indication information field indicates that a transmission scheme for the terminal device to send the first PUSCH and the second PUSCH is Type 1 transmission scheme.

70. The apparatus of claim 69, wherein the first indication information field indicates a state value of 10 or a state value of 11.

71. The apparatus of claim 70, wherein when the first indication information field indicates the state value of 10, a first SRI field and the first TPMI field are associated with the first SRS resource set, and a second SRI field and the second TPMI field are associated with the second SRS resource set.

72. The apparatus of claim 70 or 71, wherein when the first indication information field indicates the state value of 11, a first SRI field and the first TPMI field are associated with the second SRS resource set, and a second SRI field and the second TPMI field are associated with the first SRS resource set; or the first indication information field indicates that the state value of 11 indicating a reserved state.

73. The apparatus of any one of claims 69 to 72, wherein the sending unit is further configured to:
send a third PUSCH when the first indication information field indicates that a transmission scheme for the terminal device to send the third PUSCH is Type 2 transmission scheme, wherein the third PUSCH is associated with the first SRS resource set, and a third precoding matrix for the third PUSCH belongs to a second precoding matrix set.

74. The apparatus of claim 73, wherein the first indication information field indicates 00 or 01.

75. The apparatus of claim 74, wherein when the first indication information field indicates 00, a first SRI field and the first TPMI field are associated with the first SRS resource set; and a second SRI field and the second TPMI field are reserved fields, or the second SRI field and the second TPMI field are absent.

76. The apparatus of claim 74, wherein when the first indication information field indicates 01, a first SRI field and the first TPMI field are associated with the second SRS resource set; and a second SRI field and the second TPMI field are reserved fields, or the second SRI field and the second TPMI field are absent.

77. The apparatus of any one of claims 73 to 76, wherein the first precoding matrix set is a subset of the second precoding matrix set.

78. The apparatus of any one of claims 64 to 77, wherein the first information is downlink control information (DCI), and a format of the first information is DCI format 0-1 or DCI format 0-2.

79. The apparatus of any one of claims 57 to 78, wherein the sending unit is further configured to:
send second information and/or third information, wherein the second information indicates a first maximum number of transmission layers supported by the terminal device when sending a PUSCH, and the third information indicates a second maximum number of transmission layers supported by the terminal device when sending the PUSCH using Type 1 transmission scheme.

80. The apparatus of claim 79, wherein the first maximum number of transmission layers is a maximum number of transmission layers of a codebook-based PUSCH or a maximum number of transmission layers of a non-codebook-based PUSCH, and/or the second maximum number of transmission layers is the maximum number of transmission layers of the codebook-based PUSCH or the maximum number of transmission layers of the non-codebook-based PUSCH.

81. The apparatus of claim 79 or 80, wherein the sending unit is specifically configured to: send the second information and/or the third information through any one of: radio resource control (RRC) signaling, a media access control control element (MAC CE), a PUSCH, and uplink control information (UCI).

82. The apparatus of any one of claims 79 to 81, wherein the sending unit is specifically configured to:
send fourth information, wherein the fourth information indicates that a maximum number of transmission layers of each PUSCH sent using Type 1 transmission scheme does not exceed the first maximum number of transmission layers.

83. The apparatus of any one of claims 79 to 81, wherein when the terminal device does not send fourth information, a total number of transmission layers of a plurality of PUSCHs sent using Type 1 transmission scheme does not exceed the first maximum number of transmission layers, and a resource occupied by the first PUSCH overlaps a resource occupied by the second PUSCH by at least one resource element (RE).

84. A communication apparatus, comprising:

a receiving unit configured to receive a first physical uplink shared channel (PUSCH) and a second PUSCH, wherein a terminal device corresponds to $N$ sounding reference signal (SRS) resource sets, the first PUSCH is associated with a first SRS resource set among the $N$ SRS resource sets, the second PUSCH is associated with a second SRS resource set among the $N$ SRS resource sets, the first SRS resource set is different from the second SRS resource set, the terminal device comprises $M$ antenna ports, a first precoding matrix for the first PUSCH and a second precoding matrix for the second PUSCH belong to a first precoding matrix set, a non-zero element in a column vector of each precoding matrix in the first precoding matrix set is less than or equal to $M/N$, and $M$ and $N$ each are an integer greater than or equal to 2.

85. The apparatus of claim 84, wherein a number of antenna ports corresponding to each precoding matrix in the first precoding matrix set is $M$ or $M/N$.

86. The apparatus of claim 85, wherein a precoding matrix in the first precoding matrix set is used for single-layer PUSCH transmission using two antenna ports, and the first precoding matrix set contains:
$$\left\{ \frac{1}{\sqrt{2}}\begin{bmatrix}1\\0\end{bmatrix}, \frac{1}{\sqrt{2}}\begin{bmatrix}0\\1\end{bmatrix}, \frac{1}{\sqrt{2}}\begin{bmatrix}1\\1\end{bmatrix}, \frac{1}{\sqrt{2}}\begin{bmatrix}1\\-1\end{bmatrix}, \frac{1}{\sqrt{2}}\begin{bmatrix}1\\j\end{bmatrix}, \frac{1}{\sqrt{2}}\begin{bmatrix}1\\-j\end{bmatrix} \right\}.$$

87. The apparatus of claim 85, wherein a precoding matrix in the first precoding matrix set is used for two-layer PUSCH transmission using twenty-eight antenna ports, and the first precoding matrix set contains:
$$\left\{ \frac{1}{\sqrt{2}}\begin{bmatrix}1 & 0\\0 & 1\end{bmatrix}, \frac{1}{\sqrt{2}}\begin{bmatrix}1 & 1\\1 & -1\end{bmatrix}, \frac{1}{\sqrt{2}}\begin{bmatrix}1 & 1\\j & -j\end{bmatrix} \right\}.$$

88. The apparatus of claim 85, wherein a precoding matrix in the first precoding matrix set is used for single-layer PUSCH transmission using four antenna ports, and the first precoding matrix set contains:
$$\left\{ \frac{1}{\sqrt{2}}\begin{bmatrix}1\\0\\0\\0\end{bmatrix}, \frac{1}{\sqrt{2}}\begin{bmatrix}0\\1\\0\\0\end{bmatrix}, \frac{1}{\sqrt{2}}\begin{bmatrix}0\\0\\1\\0\end{bmatrix}, \frac{1}{\sqrt{2}}\begin{bmatrix}0\\0\\0\\1\end{bmatrix}, \frac{1}{\sqrt{2}}\begin{bmatrix}1\\0\\1\\0\end{bmatrix}, \frac{1}{\sqrt{2}}\begin{bmatrix}1\\0\\-1\\0\end{bmatrix}, \frac{1}{\sqrt{2}}\begin{bmatrix}1\\0\\j\\0\end{bmatrix}, \frac{1}{\sqrt{2}}\begin{bmatrix}1\\0\\-j\\0\end{bmatrix}, \frac{1}{\sqrt{2}}\begin{bmatrix}0\\1\\0\\1\end{bmatrix}, \frac{1}{\sqrt{2}}\begin{bmatrix}0\\1\\0\\-1\end{bmatrix}, \frac{1}{\sqrt{2}}\begin{bmatrix}0\\1\\0\\j\end{bmatrix}, \frac{1}{\sqrt{2}}\begin{bmatrix}0\\1\\0\\-j\end{bmatrix} \right\}.$$

89. The apparatus of claim 85, wherein a precoding matrix in the first precoding matrix set is used for two-layer PUSCH transmission using four antenna ports, and the first precoding matrix set contains:
$$\left\{ \frac{1}{\sqrt{2}}\begin{bmatrix}1 & 0\\0 & 1\\0 & 0\\0 & 0\end{bmatrix}, \frac{1}{\sqrt{2}}\begin{bmatrix}1 & 0\\0 & 0\\0 & 1\\0 & 0\end{bmatrix}, \frac{1}{\sqrt{2}}\begin{bmatrix}1 & 0\\0 & 0\\0 & 0\\0 & 1\end{bmatrix}, \frac{1}{\sqrt{2}}\begin{bmatrix}0 & 0\\1 & 0\\0 & 1\\0 & 0\end{bmatrix}, \frac{1}{\sqrt{2}}\begin{bmatrix}0 & 0\\1 & 0\\0 & 0\\0 & 1\end{bmatrix}, \frac{1}{\sqrt{2}}\begin{bmatrix}0 & 0\\0 & 0\\1 & 0\\0 & 1\end{bmatrix} \right\}.$$

90. The apparatus of claim 88 or 89, wherein the first precoding matrix set supports transmission with a codebook subset type of partial and non-coherent.

91. The apparatus of any one of claims 84 to 90, further comprising:

a sending unit configured to send first information, wherein the first information contains a first precoding information and number of layers (TPMI) field and a second TPMI field, the first TPMI field indicates the first precoding matrix, and the second TPMI field indicates the second precoding matrix.

92. The apparatus of claim 91, wherein the first TPMI field indicates an index of the first precoding matrix in the first precoding matrix set and a number of transmission layers corresponding to the first precoding matrix, and the second TPMI field indicates an index of the second precoding matrix in the first precoding matrix set and a number of transmission layers corresponding to the second precoding matrix.

93. The apparatus of claim 91 or 92, wherein the first information further contains a first SRS resource indicator (SRI) field and a second SRI field, a number of antenna ports corresponding to the first precoding matrix indicated by the first TPMI field is the same as a number of P ports among SRS ports of an SRS resource indicated by the first SRI field, a number of antenna ports corresponding to the second precoding matrix indicated by the second TPMI field is the same as a number of Q ports among SRS ports of an SRS resource indicated by the second SRI field, and both $P$ and $Q$ are integers.

94. The apparatus of claim 93, wherein $P$ and $Q$ *are* each less than or equal to $1/N$ of a maximum number of transmission layers, or $P$ and $Q$ are each less than or equal to the maximum number of transmission layers.

95. The apparatus of claim 93, wherein a sum of $P$ and $Q$ is equal to a maximum number of transmission layers, or the sum of $P$ and $Q$ is equal to twice the maximum number of transmission layers.

96. The apparatus of any one of claims 91 to 95, wherein the first information further contains a first indication information field, and the first indication information field indicates that a transmission scheme for the terminal device to send the first PUSCH and the second PUSCH is Type 1 transmission scheme.

97. The apparatus of claim 96, wherein the first indication information field indicates a state value of 10 or a state value of 11.

98. The apparatus of claim 97, wherein when the first indication information field indicates the state value of 10, a first SRI field and the first TPMI field are associated with the first SRS resource set, and a second SRI field and the second TPMI field are associated with the second SRS resource set.

99. The apparatus of claim 97 or 98, wherein when the first indication information field indicates the state value of 11, a first SRI field and the first TPMI field are associated with the second SRS resource set, and a second SRI field and the second TPMI field are associated with the first SRS resource set; or the first indication information field indicates the state value of 11 indicating a reserved state.

100.
The apparatus of any one of claims 96 to 99, wherein the receiving unit is further configured to:
receive a third PUSCH when the first indication information field indicates that a transmission scheme for the terminal device to send the third PUSCH is Type 2 transmission scheme, wherein the third PUSCH is associated with the first SRS resource set, and a third precoding matrix for the third PUSCH belongs to a second precoding matrix set.

101.
The apparatus of claim 100, wherein the first indication information field indicates 00 or 01.

102.
The apparatus of claim 101, wherein when the first indication information field indicates 00, a first SRI field and the first TPMI field are associated with the first SRS resource set; and a second SRI field and the second TPMI field are reserved fields, or the second SRI field and the second TPMI field are absent.

103.
The apparatus of claim 101, wherein when the first indication information field indicates 01, a first SRI field and the first TPMI field are associated with the second SRS resource set; and a second SRI field and the second TPMI field are reserved fields, or the second SRI field and the second TPMI field are absent.

104.
The apparatus of any one of claims 100 to 103, wherein the first precoding matrix set is a subset of the second precoding matrix set.

105.
The apparatus of any one of claims 91 to 104, wherein the first information is downlink control information (DCI), and a format of the first information is DCI format 0-1 or DCI format 0-2.

106.
The apparatus of any one of claims 91 to 105, wherein the receiving unit is further configured to:
receive second information and/or third information, wherein the second information indicates a first maximum number of transmission layers supported by the terminal device when sending a PUSCH, and the third information indicates a second maximum number of transmission layers supported by the terminal device when sending the PUSCH using Type 1 transmission scheme.

**107.**

The apparatus of claim 106, wherein the first maximum number of transmission layers is a maximum number of transmission layers of a codebook-based PUSCH or a maximum number of transmission layers of a non-codebook-based PUSCH, and/or the second maximum number of transmission layers is the maximum number of transmission layers of the codebook-based PUSCH or the maximum number of transmission layers of the non-codebook-based PUSCH.

**108.**

The apparatus of claim 106 or 107, further comprising:

a determining unit configured to determine the first information according to the second information and/or the third information.

**109.**

The apparatus of claim 108, wherein the determining unit is specifically configured to:

when the first maximum number of transmission layers is different from the second maximum number of transmission layers, determine $P$ ports among SRS ports of an SRS resource indicated by a first SRI field in the first information and $Q$ ports among SRS ports of an SRS resource indicated by a second SRI field in the first information, wherein $P$ and $Q$ satisfy any one of: $P$ and $Q$ being each less than or equal to $1/N$ of a maximum number of transmission layers, $P$ and $Q$ being each less than or equal to the maximum number of transmission layers, a sum of $P$ and $Q$ being equal to the maximum number of transmission layers, and the sum of $P$ and $Q$ being equal to twice the maximum number of transmission layers, wherein both $P$ and $Q$ are integers.

**110.**

The apparatus of any one of claims 106 to 109, wherein the receiving unit is specifically configured to:

receive the second information and/or the third information through any one of: radio resource control (RRC) signaling, a media access control control element (MAC CE), a PUSCH, and uplink control information (UCI).

**111.** The apparatus of any one of claims 106 to 110, wherein the receiving unit is further configured to:

receive fourth information, wherein the fourth information indicates that a maximum number of transmission layers of each PUSCH sent using Type 1 transmission scheme does not exceed the first maximum number of transmission layers.

**112.**

The apparatus of claim 111, further comprising:

a determining unit configured to determine the first information according to the second information, the third information, and/or the fourth information.

**113.**

A communication apparatus, comprising:

a transceiver;
a memory configured to store a program; and
a processor configured to perform data transmission and reception through the transceiver and configured to invoke the program stored in the memory, to cause the communication apparatus to perform the method of any one of claims 1 to 27.

**114.**

A communication apparatus, comprising:

a transceiver;
a memory configured to store a program; and
a processor configured to perform data transmission and reception through the transceiver and configured to invoke the program stored in the memory, to cause the communication apparatus to perform the method of any one of claims 28 to 56.

**115.**

A communication apparatus, comprising:

a processor configured to invoke a program stored in a memory, to cause the communication apparatus to perform the method of any one of claims 1 to 27.

**116.**

A communication apparatus, comprising:

a processor configured to invoke a program stored in a memory, to cause the communication apparatus to perform the method of any one of claims 28 to 56.

**117.**

A chip, comprising:

a processor configured to invoke a program stored in a memory, to cause a device equipped with the chip to perform the method of any one of claims 1 to 27.

**118.**

A chip, comprising:

a processor configured to invoke a program stored in a memory, to cause a device equipped with the chip to perform the method of any one of claims 28 to 56.

**119.**

A computer-readable storage medium configured to store a program that causes a computer to perform the method of any one of claims 1 to 27.

**120.**

A computer-readable storage medium configured to store a program that causes a computer to perform the method of any one of claims 28 to 56.

**121.**

A computer program product comprising a program that causes a computer to perform the method of any one of claims 1 to 27.

**122.**

A computer program product comprising a program that causes a computer to perform the method of any one of claims 28 to 56.

**123.**

A computer program being operable with a computer to perform the method of any one of claims 1 to 27.

**124.**

A computer program being operable with a computer to perform the method of any one of claims 28 to 56.

100

120                    110                                      120

## FIG. 1

panel1                          panel2          panel1                          panel2

FOUR DIGITAL PORTS                FOUR DIGITAL PORTS

## FIG. 2

panel1                                    panel2

FOUR DIGITAL PORTS

## FIG. 3

FIG. 4

FIG. 5

FIG. 6

FIG. 7

METHOD 800

FIG. 8

COMMUNICATION APPARATUS 900

SENDING UNIT 910

RECEIVING UNIT 920

FIG. 9

COMMUNICATION APPARATUS 1000

RECEIVING UNIT 1010

SENDING UNIT 1020

DETERMINING UNIT 1030

FIG. 10

FIG. 11

## INTERNATIONAL SEARCH REPORT

| International application No. |
| --- |
| **PCT/CN2023/080159** |

### A. CLASSIFICATION OF SUBJECT MATTER

H04B7/0456(2017.01)i; H04L5/00(2006.01)i

According to International Patent Classification (IPC) or to both national classification and IPC

### B. FIELDS SEARCHED

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP; IEEE: 物理上行共享信道, 探测参考信号, 预编码矩阵, 码本, 层数, 预编码信息和传输层数, PUSCH, SRS, precode matrix, codebook, layer, TPMI

### C. DOCUMENTS CONSIDERED TO BE RELEVANT

| Category* | Citation of document, with indication, where appropriate, of the relevant passages | Relevant to claim No. |
| --- | --- | --- |
| Y | CN 113259073 A (VIVO COMMUNICATION TECHNOLOGY CO., LTD.) 13 August 2021 (2021-08-13) description, paragraphs [0021]-[0197], and figures 1-8 | 1-124 |
| Y | CN 115299160 A (LG ELECTRONICS INC.) 04 November 2022 (2022-11-04) claims 1-17 | 1-124 |
| Y | CN 113497645 A (DATANG MOBILE COMMUNICATIONS EQUIPMENT CO., LTD.) 12 October 2021 (2021-10-12) description, paragraph [0268] | 1-124 |
| A | CN 112673680 A (GUANGDONG OPPO MOBILE COMMUNICATIONS CO., LTD.) 16 April 2021 (2021-04-16) entire document | 1-124 |
| A | WO 2022236140 A1 (QUALCOMM INC.) 10 November 2022 (2022-11-10) entire document | 1-124 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 November 2023** | **10 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/080159**

| Patent document cited in search report | | | Publication date (day/month/year) | Patent family member(s) | | | Publication date (day/month/year) |
|---|---|---|---|---|---|---|---|
| CN | 113259073 | A | 13 August 2021 | CN | 113259073 | B | 17 February 2023 |
| | | | | WO | 2021155788 | A1 | 12 August 2021 |
| CN | 115299160 | A | 04 November 2022 | EP | 4124141 | A1 | 25 January 2023 |
| | | | | US | 2023118905 | A1 | 20 April 2023 |
| | | | | WO | 2021187823 | A1 | 23 September 2021 |
| | | | | JP | 2023517732 | A | 26 April 2023 |
| | | | | KR | 20220134594 | A | 05 October 2022 |
| CN | 113497645 | A | 12 October 2021 | WO | 2021197418 | A1 | 07 October 2021 |
| | | | | TW | 202139619 | A | 16 October 2021 |
| CN | 112673680 | A | 16 April 2021 | CN | 112673680 | B | 21 March 2023 |
| | | | | WO | 2021026898 | A1 | 18 February 2021 |
| WO | 2022236140 | A1 | 10 November 2022 | TW | 202249522 | A | 16 December 2022 |

Form PCT/ISA/210 (patent family annex) (July 2022)